# EUROPÄISCHE PATENTSCHRIFT

(11) **EP 4 100 721 B1**
(45) Veröffentlichungstag und Bekanntmachung des Hinweises auf die Patenterteilung: **10.01.2024**
(21) Anmeldenummer: 21703688.8
(22) Anmeldetag: 05.02.2021
(51) Int. Cl.: G01N 21/33, G01N 21/55, G01N 21/956

(54) **EUV-REFLEKTOMETER**
EXTREME UV REFLECTOMETER
RÉFLECTOMÈTRE EXTRÈME-UV

(30) Priorität: 05.02.2020 DE 102020201416
(43) Veröffentlichungstag der Anmeldung: 14.12.2022
(73) Patentinhaber: Carl Zeiss SMT GmbH, 73447 Oberkochen (DE); Bestec GmbH, 12489 Berlin (DE)
(72) Erfinder: GIESSEL, Tatjana, 10439 Berlin (DE); ROESSNER, Marco, 15370 Petershagen (DE)
(74) Vertreter: Patentanwälte Ruff, Wilhelm, Beier, Dauster & Partner mbB
(86) Internationale Anmeldenummer: PCT/EP2021/052754
(87) Internationale Veröffentlichungsnummer: WO 2021/156411

(56) Entgegenhaltungen:
- EP-A1- 2 698 598
- DE-A1-102017 201 794
- DE-A1-102018 205 163
- US-A1- 2019 302 010

## Beschreibung

### ANWENDUNGSGEBIET UND STAND DER TECHNIK

Die Erfindung betrifft ein EUV-Reflektometer zum Messen der Reflektivität eines für EUV-Strahlung reflektierend wirkenden Prüflings in Abhängigkeit von der Wellenlänge der EUV-Strahlung und vom Einfallswinkel der EUV-Strahlung auf eine reflektierende Oberfläche des Prüflings.

Der Begriff "EUV-Reflektometer" bezeichnet in dieser Anmeldung eine Messvorrichtung zur Messung von Reflexionseigenschaften eines Prüflings für elektromagnetische Strahlung bei Wellenlängen im extremen ultravioletten (EUV) Spektralbereich.

Die Bezeichnung EUV (Extreme Ultraviolet) bezeichnet einen Wellenlängenbereich von ca. 6 nm bis ca. 20 nm innerhalb des Bereichs weicher Röntgenstrahlung, der besondere Bedeutung für Beleuchtungseinrichtungen in Lithographie-Systemen hat. Im EUV-Bereich liegt der Übergang zur Intransparenz aller Medien für diese elektromagnetische Strahlung.

Aufgrund dieser Intransparenz können EUV-Reflektometer nur im Vakuum (typischerweise Drücke kleiner als 5·10⁻⁶ mbar) und nur mit reflektierenden optischen Elementen betrieben werden. Außerdem dürfen im Restgas keine Kohlenwasserstoffe vorhanden sein, da EUV-Strahlung Kohlenwasserstoffe zersetzt, die an den Oberflächen der optischen Elemente im Strahlführungssystem und der zu prüfenden Objekte adsorbiert sind, und die Oberflächen mit Kohlenstoffschichten kontaminieren.

Es ist bekannt, dass die Reflektivität von elektromagnetischer Strahlung sowohl von der Wellenlänge abhängt, mit der eine reflektierende Oberfläche beaufschlagt wird, als auch von dem Einfallswinkel gegenüber der Oberflächennormalen am Ort des Auftreffens. Die häufig auch als Reflexionsgrad bezeichnete Reflektivität eines optischen Elementes ergibt sich dabei aus dem Verhältnis zwischen der Intensität der reflektierten Strahlung und der Intensität der einfallenden Strahlung. Bei spektraler Reflektometrie wird bei konstantem Einfallswinkel und variabler Wellenlänge gemessen. Bei der winkelabhängigen Reflektometrie wird bei konstanter Wellenlänge der Einfallswinkel der Strahlung durchgestimmt.

Messungen bei verschiedenen Wellenlängen in einem bestimmten Wellenlängenbereich ergeben Reflexionsspektren, welche unter anderem zur Charakterisierung der an der Reflexion beteiligten Materialien und deren Struktur verwendet werden können. Entsprechendes gilt für Winkelspektren, die mithilfe von Messungen bei unterschiedlichen Einfallswinkeln erfasst werden können. EUV-Reflektometer eignen sich u.a. zur Untersuchung von reflektiven Prüflingen, wie beispielsweise Spiegeln oder Masken, die eine Vielzahl von Materiallagen als reflektive Beschichtung aufweisen. Man kann z.B. auch messen, wie gering der Reflexionsgrad von absorbierenden Materialien auf Masken ist.

Spiegel mit einem Multilagenschichtsystem kommen beispielsweise in der EUV-Mikrolithographie mit einer Arbeitswellenlänge von etwa 13,5 nm oder etwa 6,8 nm zum Einsatz. Es besteht ein Bedarf, die Reflexionseigenschaften und Schichtprofile solcher Spiegel mit möglichst hoher Genauigkeit zu vermessen.

Zahlreiche Einflussfaktoren können die Messgenauigkeit eines EUV-Reflektometers beeinträchtigen. Beispielsweise kann eine zu geringe spektrale Auflösung zu einer Verschmierung der spektralen Reflexionskurve führen, wodurch eine Auswertung und Interpretation erschwert wird. Ein ungleichmäßig ausgeleuchteter und/oder ein zu großer Messfleck auf der Spiegeloberfläche kann insbesondere bei Spiegeln mit gekrümmter Oberfläche Messfehler bewirken.

Reflektometer für weiche Röntgenstrahlung (die den EUV-Bereich einschließt) werden typischerweise an Synchrotronstrahlungsquellen und dedizierten Monochromatorstrahlrohren betrieben. Synchrotronstrahlungsquellen sind allerdings aufwändig zu betreibende Großforschungseinrichtungen mit begrenzter Verfügbarkeit, so dass sich für die industrielle Qualitätssicherung durch EUV-Reflektometrie die Notwendigkeit zur Entwicklung lokaler kompakter EUV-Reflektometer unabhängig von Synchrotronstrahlungsquellen ergibt.

Ein solches lokales EUV-Reflektometer wird in dem Fachartikel "A soft x-ray/EUV reflectometer based on a laser produced plasma source" von E.M. Gullikson et al. in: Journal of X-Ray Science and Technology, Volume 3, Issue 4 (1992), 283-299 beschrieben.

Der Fachartikel "New laboratory EUV reflectometer for large optics using a laser plasma source" von L. van Loyen et al. in: Proc. of SPIE 5038 (2003) 12 beschreibt eine kommerziell verfügbare Weiterentwicklung dieses Systems. Zur Beleuchtung wird dort eine Laser-Plasma-Quelle mit Festkörpertarget und ein Monochromatorstrahlrohr mit konkavem Gitter, Spalt und konkavem Refokussierspiegel zur Monochromatisierung und Fokussierung in der dispersiven Ebene und einem zusätzlichen konkaven Spiegel in der nicht-dispersiven Ebene verwendet. Der Manipulator bzw. die Positioniereinrichtung zur Halterung und Positionierung des Prüflings umfasst einen Grundträger, der um eine vertikale Drehachse drehbar ist, sowie einen darüber liegenden horizontalen linearen Verschiebetisch. Der Läufer des Verschiebetischs trägt ein Bogenführungssystem, das eine Haltevorrichtung zum Halten des Prüflings trägt und eine Verschwenkung der darüber liegenden Mechanik um eine horizontale Schwenkachse parallel zur Translationsrichtung des darunterliegenden Verschiebetischs erlaubt. Der Schwenktisch trägt einen weiteren linearen Verschiebetisch, dessen Translationsrichtung senkrecht zur Schwenkachse verläuft sowie horizontal, sofern keine Verschwenkung erfolgt. Auf dem Läufer dieses Verschiebetischs ist ein Drehtisch angeordnet, dessen Drehachse gleichfalls senkrecht zur Schwenkachse liegt sowie horizontal, sofern keine Verschwenkung erfolgt. Die Drehplattform dieses Drehtischs trägt eine Haltevorrichtung für den Prüfling und dessen Fassung. Die Positioniereinrichtung ermöglicht sowohl die Abrasterung der gesamten Probenoberfläche als auch Korrekturen von Position und Orientierung.

Auch der Fachartikel "Characterization of the measurement uncertainty of a laboratory EUV reflectometer for large optics" von F. Scholze et al in: Meas. Sci. Technol. 18 (2007) 126-130 beschreibt diese Weiterentwicklung. Mit diesen existierenden EUV-Reflektometern mit kohlenwasserstofffreiem Vakuumsystem können Objekte mit einer Masse bis zu 80 kg vermessen werden.

Eine über die Homepage der Anmelderin Bestec GmbH zugängliche Pressemitteilung vom 7. Januar 2019 berichtet unter der Überschrift "Very large reflectometer under construction" vom Aufbau eines besonders großen Reflektometers. Ein Foto mit der Unterschrift "Soft X-Ray reflectometer" zeigt Teile der im Aufbau befindlichen Positioniervorrichtung. Das EUV-Reflektometer ist für Prüfobjekte mit Durchmessern bis zu 1500 mm und Gewichten bis zu 800 kg ausgelegt.

Die DE 10 2018 205 163 A1 beschreibt ein EUV-Reflektometer. Eine nicht näher dargestellte Positioniervorrichtung hält den Prüfling und ermöglicht eine Translation und Drehung des zu messenden Prüflings in allen drei Raumrichtungen, um an unterschiedlichen Messstellen Reflektivitätsmessungen in Abhängigkeit von der Wellenlänge und vom Einfallswinkel durchführen zu können. Eine für EUV-Strahlung sensitive Fotodiode dient als Detektor zum Erfassen der Intensität der von der Spiegelfläche reflektierten EUV-Strahlung.

Die US 2019/302010 A1 beschreibt ein EUV-Spektrometer zur räumlich aufgelösten Reflektometrie unter Verwendung teilweise kohärenten Lichts.

Im Bereich der Halbleiterherstellung mittels EUV-Lithographie werden die Anforderungen an die dafür verwendeten optischen Systeme gemäß der "Roadmap" der Halbleiterhersteller immer höher. Mit der Forderung nach immer höherem Auflösungsvermögen und damit verbundenen Forderungen nach höheren Werten für die bildseitige numerische Apertur NA nimmt die Baugröße der für die Lithographie verwendeten Optiken zu. Gleichzeitig werden die Spezifikationen zum Beispiel für die ortsabhängige und winkelabhängige Reflektivität immer anspruchsvoller. Dementsprechend ergibt sich auch Bedarf nach weiteren Verbesserungen zur Erhöhung der Messgenauigkeit von EUV-Reflektometern. Dabei geht es insbesondere um die Absolutgenauigkeit der Pose des zu prüfenden Objekts und um die Wiederholgenauigkeit der Reflektivitätsmessungen. Als "Pose" oder räumliche Lage wird hier die Kombination von Position und Orientierung eines Objektes bezeichnet. Diese Ziele sollen möglichst erreicht werden, ohne die Gesamtgröße und Komplexität der für die Messung verwendeten Systeme übermäßig zu erhöhen.

### AUFGABE UND LÖSUNG

Vor diesem Hintergrund liegt der Erfindung die Aufgabe zugrunde, ein EUV-Reflektometer der in der Einleitung erwähnten Art bereitzustellen, das im Vergleich zum Stand der Technik erlaubt, Objekte mit mehrfach, z.B. bis zu zehnmal, höherer Masse in kürzerer Zeit zu vermessen und dabei eine erhöhte Messgenauigkeit bietet. Dieses Ziel soll vorzugsweise ohne übermäßige Steigerung der Komplexität und Baugröße des EUV-Reflektometers erreicht werden.

Zur Lösung dieser Aufgabe stellt die Erfindung ein EUV-Reflektometer mit den Merkmalen von Anspruch 1 bereit. Bevorzugte Weiterbildungen sind in den abhängigen Ansprüchen angegeben. Der Wortlaut sämtlicher Ansprüche wird durch Bezugnahme zum Inhalt der Beschreibung gemacht.

Das EUV-Reflektometer gemäß einer Formulierung der beanspruchten Erfindung ist zum Messen der Reflektivität eines für EUV-Strahlung reflektierend wirkenden Prüflings in Abhängigkeit von der Wellenlänge der EUV-Strahlung und vom Einfallswinkel der EUV-Strahlung auf eine reflektierende Oberfläche des Prüflings konfiguriert. Somit kann die Reflektivität in Abhängigkeit von der Wellenlänge und, alternativ oder zusätzlich, auch die Reflektivität in Abhängigkeit vom Einfallswinkel gemessen werden.

Das EUV-Reflektometer umfasst eine EUV-Strahlungsquelle, die zum Emittieren von EUV-Strahlung konfiguriert ist. Eine nachgeschaltete Strahlformungseinheit dient zum Empfangen von EUV-Strahlung der EUV-Strahlungsquelle und zur Erzeugung eines im Wesentlichen monochromatischen Messstrahls.

Weiterhin umfasst das EUV-Reflektometer eine Positioniervorrichtung zum Halten des Prüflings und zum Positionieren des Prüflings in Bezug auf den Messstrahl in mehreren Freiheitsgraden derart, dass im Betrieb des EUV-Reflektometers der Messstrahl an einer vorgegebenen Messstelle im Bereich eines Messflecks unter einem vorgebbaren Einfallswinkel bzw. einem vorgebbaren Einfallswinkelbereich auf die reflektierende Oberfläche trifft. Damit kann die Reflektivität im Bereich des Messflecks bestimmt werden.

Ein für EUV-Strahlung sensitiver Detektor ist zum Erfassen derjenigen EUV-Strahlung konfiguriert, die von der reflektierenden Oberfläche des Prüflings reflektiert wird.

Die Positioniervorrichtung ist besonders im Hinblick auf die Erfüllung der besonderen Prüfaufgabe der EUV-Reflektometrie und deren Randbedingungen ausgelegt.

Da EUV-Strahlung durch Luft absorbiert wird, müssen nicht nur die optischen Komponenten der Strahlformungseinheit, sondern auch Komponenten der Positioniervorrichtung innerhalb einer evakuierbaren Vakuumkammer angeordnet sein. Die Positioniervorrichtung muss Translationen und Drehungen des Prüflings bezüglich aller drei Raumrichtungen ermöglichen. Dafür hat eine Positioniervorrichtung in der Regel eine Vielzahl von Aktoren, die die erforderlichen Bewegungen zur Einstellung der jeweils gewünschten Lage und Orientierung des Prüflings bewirken. Aus praktischen Gründen sind auch die Aktoren in der Vakuumkammer untergebracht. Die Antriebskomponenten müssen aufgrund der besonderen Randbedingungen Anordnung in der Vakuumkammer fettfrei sein.

Es wäre beispielsweise möglich, alle für die Positionierung eines Prüflings erforderlichen Bewegungen durch Schrittmotoren im Vakuum zu realisieren. Die Erfinder haben nun ein bisher unbeachtetes Problem erkannt, welches u.a. mit der zunehmenden Baugröße und dem zunehmenden Gewicht gewisser optischer Komponenten für EUV-Systeme zusammenhängt. Die immer höheren Anforderungen an die Abbildungsqualität und das Auflösungsvermögen wirken sich u.a. dahingehend aus, dass einige optische Komponenten im Vergleich zu früheren Konstruktionen deutlich höhere Baugröße (z.B. Durchmesser von bis zu einem Meter oder mehr, Dicken von bis zu einigen Hundert Millimetern) und entsprechend auch deutlich höheres Gewicht haben müssen. Gewichte von mehreren Hundert Kilogramm sind nicht unüblich. Es ist erkannt worden, dass dadurch die Gefahr besteht, dass bisherige Konzepte bezüglich Motordrehmoment, Motorwärmeabfuhr, Belastung von fettfreien Lagern und Führungen eventuell zukünftig den erhöhten Anforderungen nicht mehr gerecht werden können. Unter anderem im Hinblick auf diese Problemlage wird mit dieser Anmeldung ein neues Konzept für eine Positioniervorrichtung vorgestellt, welche im Zusammenhang mit unterschiedlichsten Strahlformungseinheiten als Bestandteil eines EUV-Reflektometers vorteilhaft genutzt werden kann.

Vor dem Hintergrund der genannten Anforderungen lassen sich gemäß den Erkenntnissen der Erfinder wesentliche Fortschritte hinsichtlich der genauen Positionierung von Prüflingen, insbesondere Prüflingen mit hohem Gewicht im Vakuum, dadurch erzielen, dass die Positioniervorrichtung einen um eine vertikale Drehachse drehbaren Grundträger aufweist, auf dem ein parallelkinematisches Mehrachssystem mit einer Vielzahl von Aktoren angeordnet ist, die auf eine gemeinsame Plattform wirken, welche mittels der Aktoren in sechs Freiheitsgraden (d.h. in drei linearen und drei rotatorischen Freiheitsgraden) im Raum bewegbar ist, wobei die Plattform eine Haltevorrichtung zum Halten der optischen Komponente und einen Drehantrieb zum Drehen der Haltevorrichtung um eine Drehachse trägt.

Im Rahmen dieser Anmeldung bezeichnet der Begriff "Aktor" (ggf. auch Aktuator, im Englischen "actuator") eine antriebstechnische Baueinheit, die mittels eines zugeordneten Antriebs ein von einer Steuerung stammenden elektrisches Signal in mechanische Bewegungen von mit dem Aktor gekoppelten Komponenten umsetzt. Ein Aktor im Sinne dieser Anmeldung ist somit eine Antriebsbaugruppe, die nicht zum bewegten Objekt und dessen Führungssystem gehört und die wenigstens einen Antrieb umfasst.

Die Verwendung eines parallelkinematischen Mehrachssystems zur Positionierung eines Prüflings bietet u.a. die Möglichkeit, für die erforderlichen Bewegungen des Prüflings eine hohe Anzahl von Antrieben zu nutzen, die sich die Aufgabe der Prüflingsbewegungen und Prüflingspositionierung so aufteilen können, dass jeder einzelne Antrieb weit entfernt von seiner Leistungsgrenze genutzt werden kann, so dass eventuelle Erwärmungen der Aktoren in einem unkritischen Bereich bleiben. Hier ist zu beachten, dass die Aktoren im Vakuum anzuordnen sind, in welchem die Wärmeabfuhr generell im Vergleich zu Anwendungen in Luft erheblich reduziert ist. Ein parallelkinematisches Mehrachssystem mit der Möglichkeit, sehr viele Aktoren bzw. Antriebe von Aktoren koordiniert zu verwenden, ist somit nach den Erkenntnissen der Erfinder besonders gut an die Bewegungen und Positionierung schwerer Lasten im Vakuum angepasst.

Der Grundträger ist dabei mittels eines Drehantriebs begrenzt um eine vertikale Drehachse drehbar. Bei dieser Konstruktion kann somit das gesamte parallelkinematische Mehrachssystem seine Orientierung im Raum in Bezug auf eine vertikale Drehachse verändern. Durch diese zusätzliche rotative Maschinenachse wird ein ggf. eingeschränkter Arbeitsbereich des parallelkinematischen Mehrachssystems um eine vertikale Drehachse erweitert. Damit kann z.B. die Beladung und Entladung des Prüflings in das Vakuumsystem bzw. aus diesem heraus erleichtert werden. Außerdem ist die zusätzliche Drehachse günstig, um einen möglichst großen Messwinkelbereich vollständig abdecken zu können.

Um eine exakte Positionierung und Orientierung des Prüflings für jede Messoperation zu erreichen, sollte die Positioniervorrichtung hohen Anforderungen an die Absolutgenauigkeit genügen. Dabei sollten hinsichtlich der Positionierung möglichst Positionsgenauigkeiten von 100 µm (Mikrometer) oder weniger erzielt werden. Absolutgenauigkeiten der Position in der Größenordnung von 50 µm oder weniger, z.B. im Bereich von 30 µm oder darunter, wären besonders vorteilhaft. Alternativ oder zusätzlich kann es gewünscht sein, hinsichtlich der Orientierung des Prüflings Winkelgenauigkeiten bzw. Lagegenauigkeiten im Bereich von 0,01° oder darunter, insbesondere im Bereich von 0.005° oder weniger, zu erreichen.

Die Erfinder haben erkannt, dass die erhöhten Anforderungen an die Absolutgenauigkeit der Positioniervorrichtung nicht bzw. nicht ausreichend systematisch erreicht werden, wenn aufgrund der hohen Lasten und des beschränkten Bauraums mit lastabhängigen Verbiegungen im System auch an Komponenten auf der Abtriebsseite jenseits der Encoder zu rechnen ist. Mechanische Verbiegungen zeigen in den meisten Fällen eine Hysterese, die von der Last, der Pose und vom Verfahrbereich abhängt, so dass für ein solches System auch nach der Kalibrierung die Absolutgenauigkeit durch die Differenzen in der Hysterese limitiert sein würde.

Unter anderem im Hinblick auf diese Probleme ist gemäß der beanspruchten Erfindung ein von den Antrieben der Aktoren der Positioniervorrichtung unabhängiges Messsystem zur in-situ Bestimmung der Lage und Position des Prüflings in Raum in allen sechs Freiheitsgraden vorgesehen. Das Messsystem ist der Positioniervorrichtung zugeordnet, arbeitet also mit dem Positioniersystem zusammen. In anderen Worten wird die räumliche Lage bzw. die Pose des Prüflings, also die Kombination von Positionen und Orientierung des Prüflings, mithilfe des gesonderten Messystems lastunabhängig erfasst. Die Messergebnisse des unabhängigen Messsystems werden an die Steuerung der Positioniervorrichtung übertragen und zur exakten Einstellung der räumlichen Lage des Prüflings verarbeitet. Das unabhängige Messsystem kann als funktionelle Erweiterung der Positioniervorrichtung angesehen werden. Es liefert Informationen, die zusätzlich zu der Information von Gebern der Aktoren und unabhängig von diesen erfasst werden. Das Messsystem ermöglicht einen lastunabhängigen und insoweit "objektiven" Blick auf die Pose des Prüflings und/oder der Haltevorrichtung. Diese Information wird bei der Steuerung der Positioniervorrichtung berücksichtigt.

Wird eine per se bereits äußerst präzise arbeitende Positioniervorrichtung der hier beschriebenen Art unter Verwendung von Messergebnissen bzw. Messsignalen eines lastunabhängig arbeitenden Messsystems gesteuert, so sind die angestrebten Genauigkeiten der einzustellenden Pose bei unterschiedlichen Lasten zuverlässig und wiederholbar zu erreichen, insbesondere auch bei sehr schweren Prüflingen.

Das vorzugsweise ortsfest installierte unabhängige Messsystem kann elektromechanisch arbeiten. Das Messsystem kann z.B. einen als Gelenkarm ausgestalteten Messarm aufweisen, der einerseits fest mit einem raumfesten Fixpunkt und andererseits mit dem Prüfling oder der Haltevorrichtung für den Prüfling gekoppelt ist, wobei der Gelenkarm mit Messeinheiten ausgestattet ist, um die relative Lage des Angriffspunkts an dem Prüfling oder an der Haltevorrichtung für den Prüfling zum raumfesten Fixpunkt zu erfassen. In den Messeinheiten des Messarms können beispielsweise Längeninterferometer und/oder Neigungsmesser und/oder Abstandssensoren und/oder andere Encoder (Geber) verwendet werden.

Derzeit bevorzugt ist ein berührungslos arbeitendes unabhängiges Messsystem. Gemäß einer Ausführungsform ist das unabhängige Messsystem als optisches Messsystem ausgelegt. Beispielsweise kann das Messsystem zur Durchführung einer optischen Triangulation ausgebildet sein. Das Messsystem kann beispielsweise zwei, drei oder mehr Kameras aufweisen, welche auf Referenzmarken ausgerichtet oder ausrichtbar sind, die direkt auf dem Prüfling und/oder auf der Haltevorrichtung für den Prüfling befestigt sind. Die Bildsignale der Kameras können z.B. zum Zwecke der Triangulation oder einer anderen Auswertemethode gemeinsam verarbeitet werden. Die Kameras können dabei als In-Vakuum-Kamera innerhalb der Vakuumkammer montiert sein. Sie können sich auch außerhalb des Vakuums befinden und durch entsprechend angebrachte Flansche bzw. durch Sichtfenster hindurch auf den Prüfling und/oder die Haltevorrichtung für den Prüfling gerichtet sein.

Ein bevorzugtes optisches Messsystem ist speziell an die hier typischen Prüfaufgaben angepasst, nämlich in-situ alle sechs Freiheitsgrade eines ggf. sehr großen und schweren Messobjekts bzw. eines Prüflings bzw. seiner Haltevorrichtung im Vakuum über eine relativ große Entfernung, beispielsweise von bis zu 3 m oder mehr, in einem großen Messbereich, beispielsweise in der Größenordnung von 1 m oder mehr, und bei Winkeldifferenzen von bis zu 360° zu bestimmen.

Unter diesen Bedingungen kann der für die Erfassung des Prüflings erforderliche Akzeptanzwinkel einer herkömmlichen Kamera so groß werden, dass signifikante Verzerrungen im äußeren Gesichtsfeld der Bilder auftreten können. Diese können die Messgenauigkeit beeinträchtigen. Unter anderem aus diesem Grund ist bei einem bevorzugten Messsystem vorgesehen, dass die Kameras als Lochkameras mit einer der Positioniervorrichtung zugewandten Lochblende bzw. einem Loch und einem mit Abstand hinter dem Loch angebrachten zweidimensionalen Bildsensor ausgebildet sind. Durch den Verzicht auf ein optisches Objektiv werden dadurch verursachte Verzerrungen vermieden, so dass insoweit auch bei hohen Akzeptanzwinkels geometrisch exakte Abbildungen möglich sind. Vorzugsweise wird eine feste Lochblende verwendet, eine Verstellung der Lochgröße ist weder nötig noch gewünscht.

Um mit dieser Messanordnung die Bedingungen der geometrischen Optik möglichst exakt zu reproduzieren, sind vorzugsweise Sichtfenster vorgesehen, die als transparente Folienfenster mit einer Dicke im Mikrometerbereich, ausgelegt sind. Die Dicke kann z.B. zwischen 2 µm und 10 µm liegen. Dadurch gibt es beim schrägen Lichtdurchtritt nur einen vernachlässigbar geringen Strahlversatz.

Ein weiterer Beitrag zur Erhöhung der Messgenauigkeit kann dadurch erreicht werden, dass das Messsystem aktiv leuchtende Referenzmarken aufweist, insbesondere in Form von lichtemittierenden Dioden (LEDs). Der Prüfling und/oder die Haltevorrichtung kann mit vakuumkompatiblen LEDs mit ausreichender Lichtleistung sowie mit fester und bekannter relativer Anordnung zueinander bestückt werden.

Insbesondere kann das Messsystem so ausgelegt sein, dass folgende Bedingungen erfüllt sind:
(i) Es sind mindestens zwei Lochkameras vorgesehen, die unter einem festen Winkel zueinander mit jeweils festem Abstand zwischen der Lochblende und dem Bildsensor derart zueinander angeordnet, dass sich im Erfassungsbereich der Lochkameras jeweils mindestens drei gemeinsame Referenzmarken in konstanten Abständen zueinander befinden;
(ii) der Durchmesser der Lochblende, ein Abstand zwischen der Lochblende und dem Bildsensor sowie die räumliche Dichte von Pixeln des Bildsensors sind derart ausgelegt, dass die Halbwertsbreite eines Bilds eines über die Lochblende abgebildeten Referenzelements auf den Bildsensor so groß ist, dass das Bild eine Vielzahl von Pixeln des Bildsensors abdeckt, insbesondere eine Fläche von mindestens 10 × 10 Pixeln.

Die Auswerteeinrichtung kann dann dazu konfiguriert sein, eine Bildauswertung unter Ausnutzung des Effekts der Superauflösung durchzuführen. Dazu kann z.B. die Position des geometrischen Schwerpunkts einer Intensitätsverteilung im Bild einer Referenzmarke mit einer Genauigkeit von typisch weniger als einem Zehntel Pixel, z.B. etwa 0.02 Pixel, bestimmt werden.

Es hat sich gezeigt, dass dadurch in Abhängigkeit vom Objektabstand örtliche Auflösungen im Bereich von unterhalb 10 µm, insbesondere im Bereich von 3 µm bis 8 µm, und/oder Absolutgenauigkeiten im Bereich von weniger als 50 µm, insbesondere um ca. 30 µm, erzielbar sind. Dadurch kann u.a. die Absolutgenauigkeit der Bestimmung der Pose des zu prüfenden Objekts im Vergleich zu herkömmlichen Lösungen verbessert werden.

Ein unabhängiges optisches Messsystem der hier beschriebenen Art kann auch in Kombination mit anders aufgebauten Positioniervorrichtungen, insbesondere solchen des genannten Standes der Technik, mit Vorteil genutzt werden, so dass das optische Messsystem bzw. Ausführungsformen davon als eigenständige Erfindungen angesehen werden.

Für die Ausgestaltung der Positioniervorrichtung gibt es unterschiedliche Möglichkeiten.

Die Positioniervorrichtung kann beispielsweise ein parallelkinematisches Mehrachssystem nach Art eines Stewart-Gough-Manipulators (engl: Stewart platform) aufweisen, das eine Beweglichkeit der Plattform in allen sechs Freiheitsgraden erlaubt. Das parallelkinematische Mehrachssystem kann z.B. als sog. "Hexapod" konstruiert sein. Ein klassischer Hexapod ist eine spezielle Form einer Parallelkinematikmaschine, die über sechs Beine veränderlicher Länge verfügt.

Derzeit wird jedoch eine alternative Ausgestaltung als vorteilhaft angesehen. Bei einer Weiterbildung weist das parallelklimatische Mehrachssystem eine Tripod-Anordnung mit genau drei Beinen auf, die jeweils an einen dem Grundträger zugewandten ersten Ende mittels einer ersten Gelenkanordnung mit dem Grundträger und an einem der Plattform zugewandten zweiten Ende mittels einer zweiten Gelenkanordnung mit der Plattform beweglich gekoppelt sind. Durch diese Konstruktion kann eine Beweglichkeit der von der Plattform getragenen Komponenten in allen sechs Freiheitsgraden geschaffen werden.

Die Beine der Tripod-Anordnung haben vorzugsweise keine veränderliche Länge, sondern eine feste Länge und können dementsprechend im Hinblick auf das Tragen schwerer Lasten sehr stabil ausgelegt werden.

Vorzugsweise ist vorgesehen, dass die erste Gelenkanordnung ein in mehreren Achsen bewegliches Gelenk, beispielsweise ein Kugelgelenk oder ein auf einem Drehlager angeordnetes Kardangelenk aufweist, welches mit einem Schlitten gekoppelt ist, der in einer Bezugsebene in zwei zueinander senkrechten Richtungen verfahrbar ist. Die erste Gelenkanordnung kann z.B. eine Baugruppe nach Art eines Kreuztischs aufweisen, also eines Zweiachssystems, das zwei zueinander orthogonale einachsige Linearführungssysteme mit zugehörigen Schlitten aufweist, um das in mehreren Achsen bewegliches Gelenk in beliebigen Richtungen innerhalb einer Bezugsebene zu bewegen. Diese Baugruppe wird mit dem vorzugsweise um drei Drehachsen drehbaren Gelenk kombiniert, so dass das dem Grundträger zugewandte erste Ende der Beine und das daran vorgesehene Gelenk an unterschiedliche Orte in der Bezugsebene gesteuert bewegt bzw. dort positioniert werden kann.

Die plattformseitige zweite Gelenkanordnung kann demgegenüber relativ einfach ausgestaltet sein, insbesondere in Form eines einachsigen Drehgelenks bzw. eines Schwenkgelenks, welches eine Schwenkung des Beins gegenüber der Plattform um eine quer zur Erstreckung des Beins verlaufende Schwenkachse ermöglicht.

Insbesondere bei der schnellen und exakten Positionierung von relativ schweren Prüflingen, wie zum Beispiel Spiegeln für optische Systeme der EUV-Lithographie, im Vakuum können herkömmliche Konzepte von Manipulatoren an ihre Grenzen gelangen, beispielsweise weil der Verschleiß durch Abrieb unverhältnismäßig hoch wird und/oder die erforderlichen Kräfte und Momente nicht ausreichend gut aufgebracht werden können. Bei manchen Ausführungsformen wird ein Beitrag zur Vermeidung derartiger Probleme dadurch erreicht, dass Antriebe und Führungssysteme der Tripod-Anordnung derart ausgelegt sind, dass maximal wirksame Kräfte auf Antriebe, Schlitten und Führungen im Mittel zu ähnlichen Anteilen auf axiale und nicht-axiale Richtungen verteilt sind. Der Begriff "axiale Richtung" bezeichnet hier die Verfahrrichtung eines Schlittens entlang eines Linearführungssystems. Die Kräfte können insbesondere etwa in gleichen Teilen auf axiale und nicht-axiale Richtungen verteilt sein. Dadurch kann unter anderem erreicht werden, dass die in Axialrichtung wirksamen Antriebe entlastet werden, indem aufgrund der Konstruktion Querkraftanteile zugelassen werden, die von den in der Regel stabil ausgelegten Führungssystemen gut aufgenommen werden können.

Bei einer Ausführungsform wird diese günstige Kräfteverteilung dadurch erreicht, dass die zweite Gelenkanordnung als ein einachsiges Schwenkgelenk ausgebildet ist, das eine Schwenkung des Beins gegenüber der Plattform um eine quer zur Erstreckung des Beins verlaufende Schwenkachse in der Weise ermöglicht, dass sich ein der ersten Gelenkanordnung zugewandtes Ende des Beins bei Schwenkung des Beins um die Schwenkachse in der Bezugsebene in einer Verlagerungsrichtung verlagert und dass die erste Gelenkanordnung orthogonal gekreuzte Schlitten mit Verfahrrichtungen aufweist, die schräg, insbesondere in einem Winkel von 45°, zu der Verlagerungsrichtung verlaufen.

Ein weiterer Beitrag im Hinblick auf eine schnelle und exakte Positionierung bei Schonung von Antrieben wird bei manchen Ausführungsformen dadurch erreicht, dass einige oder alle Antriebe zur Erzeugung einer geradlinigen Linearbewegung einer angetriebenen Komponente eine von dem Antrieb drehbar antreibbare Trapezgewindespindel aufweisen, auf der eine mit der Komponente gekoppelte Spindelmutter läuft. Es können z.B. auch Kugelrollspindeln im Antriebssystem genutzt werden. Mithilfe von Trapezgewindespindeln lassen sich aber auch höhere Lasten sicher bewegen, außerdem benötigen sie bei gleichen Lasten deutlich weniger Bauraum als andere Konzepte und sind im Wartungsfall leichter zu wechseln.

Ein besonderer Beitrag zur Reduzierung der Wärmeabfuhr bei den Antrieben der Aktoren wird bei einer bevorzugten Ausführungsform dadurch erreicht, dass bei wenigstens einer translatorischen Bewegungsachse zwei separate Antriebsmotoren zur gemeinsamen Bewegung der Bewegungsachse vorgesehen sind. Es wird also ein elektromechanisches Bewegungssystem einer geometrischen Achse der Positioniervorrichtung bereitgestellt, bei dem zwei separate Antriebsmotoren eine gemeinsame Antriebsachse bewegen. Im Bereich der Werkzeugmaschinen sind ähnliche Antriebskonzepte für einen anderen Zweck unter der Bezeichnung "Gantry-Antrieb" bekannt. Bei diesem Konzept werden also bewusst mehr Antriebsmotoren eingesetzt, als für eine einfache Linearbewegung einer Achse notwendig wären. Als Vorteil wird eine reduzierte Belastung der einzelnen Antriebe und damit eine geringere Wärmeerzeugung erreicht, wodurch dieses Antriebskonzept besonders gut an die Anwendung in der Vakuumkammer eines EUV-Reflektometers angepasst ist.

Bei manchen Ausführungsformen ist vorgesehen, dass die zwei Antriebsmotoren einen Parallelantrieb bilden und der Parallelantrieb eine Deichsel zur aktiven Korrektur einer Deichselorientierung aufweist. Obwohl eine nicht-taktile Deichsel möglich ist, sind die zwei Antriebsstränge vorzugsweise über eine physisch vorhandene mechanische Deichsel kraftübertragend mechanisch gekoppelt. Vorzugsweise ist die Deichsel encodiert, weist also wenigstens einen Sensor oder Geber auf, der z.B. den Belastungszustand und/oder die Orientierung der Deichsel erfassen kann. Mithilfe der encodierten Deichsel kann messtechnisch erfasst werden, ob einer der Antriebe bzw. die dadurch angetriebene Komponente einer vom anderen Antrieb angetriebenen Komponente ungünstig vorauseilt oder gegenüber dieser zurückbleibt. Solche ungleichen Vorschübe werden mithilfe der Deichsel erfasst, mithilfe eines Gebers in Signale umgewandelt und die Signale dazu verwendet, die Antriebe phasenweise derart ungleich anzusteuern, dass das Vorauseilen oder Zurückbleiben wenigstens teilweise kompensiert wird. Dadurch können durch Ungleichheiten verursachte hemmende Kräfte vermieden oder reduziert werden.

Als weitere Maßnahme kann alternativ oder zusätzlich vorgesehen sein, dass jedem Bein der Tripod-Anordnung eine Federanordnung mit einer oder mehreren Federn zugeordnet ist, wobei die Federanordnung einerseits an dem Bein und andererseits an der Plattform angreift. Bei entsprechender Auslegung der Federkräfte kann eine Vorspannung der Parallelkinematik-Baugruppe so eingestellt werden, dass für jede Pose die wirkenden Kräfte erheblich reduziert werden können, beispielsweise um bis zu ca. 50 % und bei einem Nulldurchgang sogar um 100%. Zur Kompensation von Axialkräften an den Antriebsschlitten der Tripod-Anordnung können somit Federn vorgesehen sein.

Das Basisgestell der Positioniervorrichtung könnte beispielsweise im Bodenbereich der Vakuumkammer gehäusefest montiert sein. Vorzugsweise ist jedoch vorgesehen, dass das Basisgestell mechanisch entkoppelt von Komponenten der Vakuumkammer montiert ist. Vorzugsweise sind an der Unterseite des Basisgestells mehrere Stellfüße zum Aufstellen des Basisgestells unmittelbar auf einem Hallenboden angebracht, wobei die Stellfüße ohne Berührungskontakt mit der Kammerwand durch Öffnungen der Bodenplatte der Vakuumkammer greifen und gegenüber der Bodenplatte durch vakuumdichte Entkopplungseinrichtungen mechanisch entkoppelt sind. Dadurch werden eventuell nachteilige schwingungstechnische, thermale und/oder mechanische Einflüsse der Vakuumkammer auf die Messung reduziert.

Die Strahlformungseinheit bevorzugter Ausführungsformen umfasst einen Monochromator, der zum Einstellen der Wellenlänge des Messstrahls konfiguriert ist. Der Monochromator umfasst ein konkav gekrümmtes Reflexionsgitter und eine dem Reflexionsgitter nachgeschaltete Blendenanordnung mit einem Austrittsspalt, dessen Spaltbreite einstellbar ist. Im Strahlengang des Messstrahls vor dem Reflexionsgitter ist ein vorderes Reflexionselement angeordnet. Im Strahlengang hinter dem Austrittsspalt bzw. der Blendenanordnung ist ein hinteres Reflexionselement angeordnet. Das vordere Reflexionselement, das Reflexionsgitter und das hintere Reflexionselement liegen optisch hintereinander im Strahlengang des Messstrahls. Dieser hat nach Durchtritt durch den Austrittsspalt die für die Messung gewünschte Wellenlänge bzw. Wellenlängen aus einem ggf. relativ eng begrenzten Wellenlängenbereich.

Gemäß einer bevorzugten Ausführungsform sind das vordere Reflexionselement und das konkav gekrümmte Reflexionsgitter in Kombination miteinander derart ausgebildet, dass im Bereich der Blendenanordnung ein erster Zwischenfokus in einer ersten Richtung und ein zweiter Zwischenfokus in einer zur ersten Richtung senkrechten zweiten Richtung erzeugbar ist. Die Blendenanordnung hat einen ersten Austrittsspalt mit einer in der der ersten Richtung einstellbaren ersten Spaltbreite und einen zweiten Austrittsspalt mit einer in der zweiten Richtung einstellbaren zweiten Spaltbreite.

Gemäß einer anderen Formulierung weist die Blendenanordnung eine rechteckige Blendenöffnung auf, deren lichte Weite in zwei zueinander senkrechten Richtungen unabhängig voneinander verstellt werden kann. Eine derartige Blendenanordnung wird in dieser Anmeldung auch als zweidimensional justierbare Rechteckblende bezeichnet.

Der Aufbau kann auch so beschrieben werden, dass das vordere Reflexionselement und das Reflexionsgitter Teil eines ersten Teilsystems der Strahlformungseinheit sind, welches eine in zwei orthogonalen Ebenen wirksame Zwischenabbildung erreicht. Der resultierende Zwischenfokus liegt im Bereich einer Blendenöffnung der Blendenanordnung und kann in zwei zueinander senkrechten Richtungen mit einstellbarer Spaltbreite begrenzt werden.

Das der Blendenanordnung nachgeschaltete hintere Reflexionselement ist Bestandteil eines zweiten Teilsystems, welches refokussierend wirkt und den Bereich des Zwischenfokus in den Bereich des Messflecks abbildet.

Die Einführung des Zwischenfokus ermöglicht eine Verbesserung der Performance, unter anderem aus den folgenden Gründen. Erstens entspricht die Intensitätsverteilung im Quellfleck nicht der gewünschten Verteilung im Fokus, so dass im Zwischenfokus durch geeignete Aperturen ein verbesserter virtueller Quellfleck für den Refokussierspiegel geschaffen wird. Zweitens ist zu beachten, dass die verwendete Quelle isotrop emittiert und man möglichst viel Akzeptanz anstrebt, um einen möglichst großen Anteil der emittierten Strahlung "einzufangen" und dadurch Intensitätsverluste möglichst gering zu halten. In horizontaler Richtung soll die Divergenz am Prüfling möglichst klein sein, da sonst die Auflösung der Winkelspektren des Reflektometers limitiert würde. Der Begriff "Divergenz" bezeichnet hierbei die Winkelbandbreite des Messstrahls und bestimmt somit, aus welchem Einfallswinkelbereich die Strahlen des Messstrahls im Bereich des Messflecks auf die zu messende Oberfläche einfallen. Weil die Divergenz in Horizontalrichtung somit klein sein soll, wählt man hohe Akzeptanz in vertikaler Richtung, die allerdings die Abbildungsfehler vergrößert. Dies gilt im Übrigen auch bei Verwendung von elliptischen Spiegeln durch Fertigungs- und Justagefehler. Auch zur Verringerung von Abbildungsfehlern ist die Beschneidung des virtuellen Quellflecks durch die Apertur im Zwischenfokus günstig. Die Apertur schneidet dabei nur relativ wenig Intensität weg, so dass sich insgesamt eine positive Gesamtbilanz dieser Maßnahme ergibt.

In anderen Worten: es wird eine Zwischenabbildung in der Weise erzeugt, dass mit Hilfe der gekreuzten Austrittsspalte der Blendenanordnung sowohl die Strahlgröße des Messstrahls als auch das Strahlprofil im Bereich des Messflecks über die einstellbaren Austrittsspalte eingestellt werden können.

Außerdem können mit Hilfe der neuen Anordnung erhöhte Genauigkeitsanforderungen z.B. im Bereich von 99,9% oder mehr bezüglich des Reflexionsgrads erreicht werden. Mit anderen Worten können Messungen systematisch so durchgeführt werden, dass der ermittelte Messwert um maximal 0,1% vom wahren Wert der Reflektivität abweicht.

Es gibt unterschiedliche Möglichkeiten, zu erreichen, dass das erste Teilsystem, welches das vordere Reflexionselement und das Reflexionsgitter enthält, eine Zwischenabbildung in zwei zueinander senkrechten Ebenen bzw. Richtungen bewirkt. Eine Weiterbildung, die ohne Steigerung der Anzahl der optischen Elemente der Strahlformungseinheit auskommt, sieht vor, dass das Reflexionsgitter des Monochromators als Reflexionsgitter mit variablem Linienabstand ausgebildet ist. Dieser Gittertyp wird hier auch als VLS-Gitter bezeichnet, wobei VLS für "variable line spacing" steht. Ein VLS-Gitter erlaubt auch, die Lage des Zwischenfokus in gewissen Grenzen frei zu wählen.

Gitter im streifenden Einfall erzeugen in der Regel eine gute Fokussierung (und damit eine gute Wellenlängenselektion bzw. gute Schmalbandigkeit) nur für eine Wellenlänge. Bei längerer Brennweite ist der Fehler der Wellenlängenabhängigkeit des Auflösungsvermögens meist akzeptabel. Ist jedoch z.B. aus Gründen eines begrenzten Bauraums eine kürzere Brennweite gewünscht, können sich von der Wellenlänge abhängige Fehler des Auflösungsvermögens bemerkbar machen in dem Sinne, dass der Messstrahl zusätzlich zur Strahlung der gewünschten Wellenlänge noch störende Strahlungsanteile benachbarter Wellenlängen enthält. Durch Verwendung eines geeignet ausgelegten VLS-Gitters kann der Verschlechterung des Auflösungsvermögens bei Verkürzung der Brennweite entgegengewirkt werden.

Der Linienabstand zwischen den Gitterlinien und/oder die Furchenform werden dabei vorzugsweise über die wirksame reflektive Fläche so variiert, dass das Reflexionsgitter bei ansonsten gleichen Bedingungen ein verbessertes Auflösungsvermögen bei kürzerer Brennweite als im Falle eines konstanten Linienabstandes bietet. Der Linienabstand wird vorzugsweise derart variiert, dass der Linienabstand von der (dem vorderen Reflexionselement näheren) Eintrittsseite zur (der Blendenanordnung näheren) Austrittsseite kontinuierlich abnimmt, wenn mit positiver erster Ordnung gearbeitet wird (und umgekehrt). Anders ausgedrückt wird (bei Nutzung der negativen ersten Ordnung) die Liniendichte in Strahlrichtung erhöht. Die Liniendichte ist somit höher in Richtung des Monochromatorspalts.

Insbesondere kann es so sein, dass das mit variablem Linienabstand ausgestaltete Reflexionsgitter des Monochromators, also das VLS-Gitter, eine meridional zylindrische Krümmung aufweist. Der Begriff "meridional" bedeutet in diesem Zusammenhang, dass die Ebene der Krümmung im Wesentlichen parallel oder im spitzen Winkel zur Einfallsebene verläuft.

Das zwischen der Blendenanordnung mit den Austrittspalten einerseits und dem Messfleck andererseits liegende zweite Teilsystem dient zur Refokussierung der im Bereich des Zwischenfokus bzw. im Bereich der rechteckigen Blendenöffnung vorliegenden Intensitätsverteilung in den Bereich des Messflecks.

Bei einer bevorzugten Weiterbildung ist vorgesehen, dass das hintere Reflexionselement als ellipsoidales Reflexionselement mit einer ersten Krümmung in einer ersten Richtung und einer zweiten Krümmung in einer dazu senkrechten zweiten Richtung ausgebildet ist, also als zweidimensional konkav gekrümmtes Reflexionselement Somit kann das hintere Reflexionselement so gestaltet werden, dass es in zwei zueinander orthogonalen Ebenen refokussierend wirkt. Damit kann auf ein weiteres Reflexionselement im zweiten Teilsystem verzichtet werden, so dass vorzugsweise zwischen der Blendenanordnung und dem Messfleck nur ein einziges Reflexionselement mit bidirektional gekrümmter Reflexionsfläche vorhanden ist. Dies bringt Vorteile hinsichtlich der axialen Baugröße, die bei Verwendung nur eines optischen Elementes kompakt bleiben kann. Zum anderen können dadurch Intensitätsverluste, die durch Einfügen eines weiteren optischen Elementes verursacht würden, vermieden werden, so dass der Messfleck mit relativ hoher Intensität ausgeleuchtet werden kann. Dies kann zur Messgenauigkeit beitragen.

Vorzugsweise hat die Strahlformungseinheit somit genau drei Reflexionselemente mit gekrümmten reflektierenden Flächen, nämlich ein erstes Reflexionselement, das diesem nachgeschaltete konkav gekrümmte Reflexionsgitter und das zwischen Blendenanordnung und Messfleck angeordnete hintere Reflexionselement.

Für die Ausbildung des vorderen Reflexionselementes gibt es unterschiedliche Möglichkeiten. Bei einem Ausführungsbeispiel ist das vordere Reflexionselement als sagittal planzylindrisches Reflexionselement ausgebildet. Als "planzylindrisches Reflexionselement" wird hier ein Reflexionselement bezeichnet, dessen reflektierende Oberfläche in einer Richtung in Form einer Zylinderfläche gekrümmt und in einer dazu im Wesentlichen senkrechten Richtung geradlinig bzw. eben verläuft, so dass die reflektierende optische Oberfläche eines planzylindrischen Reflexionselementes ein Teil einer Mantelfläche eines Kreiszylinders ist. Neben der Gestalt der reflektierenden Oberfläche ist auch deren Orientierung relativ zum Messstrahl maßgeblich für die optische Wirkung. Der Begriff "sagittal" bedeutet im Kontext dieser Anmeldung, dass die Krümmung der reflektierenden Oberfläche in einer Ebene verläuft, die im Wesentlichen senkrecht zur Einfallsebene des Hauptstrahls des Messstrahls auf die reflektierende Oberfläche liegt.

Bei einer alternativen Ausführungsform ist das vordere Reflexionselement als konkaves, planelliptisches vorderes Reflexionselement ausgebildet. Als planelliptisches Reflexionselement wird ein Reflexionselement bezeichnet, dessen reflektierende optische Oberfläche in einer Richtung in Form einer Ellipse und in einer dazu im Wesentlichen senkrechten Richtung eben bzw. geradlinig oder ungekrümmt verläuft.

Das EUV-Reflektometer soll in der Lage sein, den Reflexionsgrad einer reflektierenden Oberfläche bzw. ihre Reflektivität im EUV-Bereich zu bestimmen. Gemäß einer Weiterbildung sind dazu ein Referenzdetektor und ein Strahlteiler zur Auskopplung eines Anteils der EUV-Strahlung des Messstrahls zu dem Referenzdetektor vorgesehen. Der Referenzdetektor kann ebenso wie der Detektor zu Erfassung der von der reflektierenden Oberfläche reflektierten EUV-Strahlung zum Erfassen der Intensität der auftreffenden EUV-Strahlung konfiguriert sein. Aus den Messwerten des Referenzdetektors kann ein Maß für die Intensität des auf den Messfleck einfallenden Messstrahls ermittelt werden. Die Messvorrichtung kann somit zum Ermitteln eines Reflexionsgrades basierend auf der erfassten Intensität des einfallenden Messstrahls (mittels des Referenzdetektors) und der erfassten Intensität der reflektierten Strahlung (mittels des Detektors) konfiguriert sein.

Der Strahlteiler kann beispielsweise einen Spiegel aufweisen, der am Rand des Messstrahls einen Teil des EUV-Messstrahls erfasst und diesen Anteil in Richtung des Referenzdetektors reflektiert. Alternativ wäre auch ein gekrümmter Strahlteilerkamm als Strahlteiler möglich, z.B. um gut auf den Referenzdetektor zu fokussieren und ihn nicht zu überstrahlen.

Das hier vorgeschlagene Konzept ermöglicht gute Kompromisse zwischen erzielbarer Messgenauigkeit, Bauraumbedarf in genereller Strahldurchlaufrichtung des Messstrahls sowie Anpassung an nachgeschaltete Einheiten des EUV-Reflektometers. Bei bevorzugten Ausführungsformen sind die Komponenten so ausgelegt, dass ein Verhältnis zwischen Bildweite und Gegenstandsweite eines das vordere Reflexionselement und das Reflexionsgitter aufweisenden ersten optischen Teilsystems bei weniger als 3, insbesondere weniger als 2, und eines das hintere Reflexionselement aufweisenden zweiten Teilsystems bei weniger als 7 liegt. Nach den Erfahrungen der Erfinder kann dadurch ein besonders guter Kompromiss zwischen der erforderlichen Größe des Messflecks am Prüfling ("spotsize") einerseits und der Akzeptanz bzw. der Eingangsapertur für die divergente Quellstrahlung andererseits erzielt werden. Ist die Eingangsapertur relativ groß, so kann ein entsprechend relativ großer Anteil der Quellstrahlung eingangsseitig von der Strahlformungseinheit erfasst und für die Messung genutzt werden. Ist das Intensitätsniveau innerhalb des Messstrahls im Bereich des Messflecks relativ hoch, so fallen evtl. Fehlerquellen, die die Messgenauigkeit beeinträchtigen können, weniger ins Gewicht. Andererseits sollte im Bereich der Austrittsseite der Strahlformungseinheit der Messstrahl so gestaltet sein, dass die Messstrahlung aus einem relativ engen Winkelbereich auf den Messfleck trifft, so dass insbesondere winkelaufgelöste Messungen mit hoher Präzision möglich werden. Außerdem ist zu bedenken, dass der Prüfling für die Messung innerhalb einer evakuierbaren Vakuumkammer gehalten werden muss, so dass der Messfleck nicht zu nah an den optischen Komponenten der Strahlformungseinheit generiert werden sollte. Die bevorzugte Auslegung der Verhältnisse zwischen Bildweite und Gegenstandsweite wird als guter Kompromiss in Hinblick auf diese diversen Randbedingungen angesehen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1A: zeigt eine schematische Draufsicht auf Komponenten eines EUV-Reflektometer gemäß einem ersten Ausführungsbeispiel dargestellt in einer x-y-Ebene;
- Fig. 1B: zeigt eine Ansicht einer im Ausführungsbeispiel verwendeten Blendenanordnung mit rechteckiger Blendenöffnung;
- Fig. 2: zeigt eine schematische Seitenansicht des Ausführungsbeispiels aus Fig. 1 dargestellt in einer x-z-Ebene;
- Fig. 3: zeigt eine Draufsicht auf ein zweites Ausführungsbeispiel eines EUV-Reflektometers dargestellt in einer x-y-Ebene;
- Fig. 4: zeigt eine schematische Seitenansicht des Ausführungsbeispiels aus Fig. 3 dargestellt in einer x-z-Ebene;
- Fig. 5: zeigt eine schematische Darstellung von Komponenten eines Ausführungsbeispiels einer bei einem EUV-Reflektometer verwendbaren Positioniervorrichtung zum Halten und Positionieren eines Prüflings;
- Fig. 6: zeigt schematisch ein Ausführungsbeispiel mit einem unabhängig von der Positioniervorrichtung arbeitenden ortsfesten taktilen Messsystem mit einem Gelenkarm;
- Fig. 7: zeigt schematisch ein Ausführungsbeispiel mit einem unabhängig von der Positioniervorrichtung arbeitenden ortsfesten optischen Messsystem mit mehreren auf Referenzmarken gerichteten Kameras;
- Fig. 8: zeigt eine schematische Draufsicht auf den Bereich der Lagerung eines Tripod-Beins auf einem Kreuzschlitten;
- Fig. 9: zeigt eine schematische Draufsicht auf einen Parallelantrieb mit encodierter Deichsel;
- Fig. 10: zeigt eine schematische Darstellung eines externen optischen Messsystems zur fotogrammetrischen Messung der Pose eines Prüflings;

### DETAILLIERTE BESCHREIBUNG DER AUSFÜHRUNGSBEISPIELE

In den nachfolgend beschriebenen Ausführungsbeispielen bzw. Ausführungsformen oder Ausführungsvarianten sind funktionell oder strukturell einander ähnliche Elemente zum Teil mit den gleichen oder ähnlichen Bezugszeichen bezeichnet. Dadurch kann zum besseren Verständnis bei Merkmalen der einzelnen Elemente eines bestimmten Ausführungsbeispiels gegebenenfalls auch auf die Beschreibung anderer Ausführungsbeispiele oder die allgemeine Beschreibung der Erfindung bezuggenommen werden.

Relative Positionen von Optikkomponenten bzw. optischen Elementen werden z.T. mit Präpositionen wie "zwischen", "vor", "hinter" oder dergleichen beschrieben. Diese Präpositionen beziehen sich, soweit nicht anders angegeben, auf optische Positionen entlang eines optischen Strahlengangs. Bezeichnungen wie "erster", "zweiter", etc. dienen ausschließlich der eindeutigen Identifizierung der entsprechenden Elemente und beschreiben im Allgemeinen keine Reihenfolge.

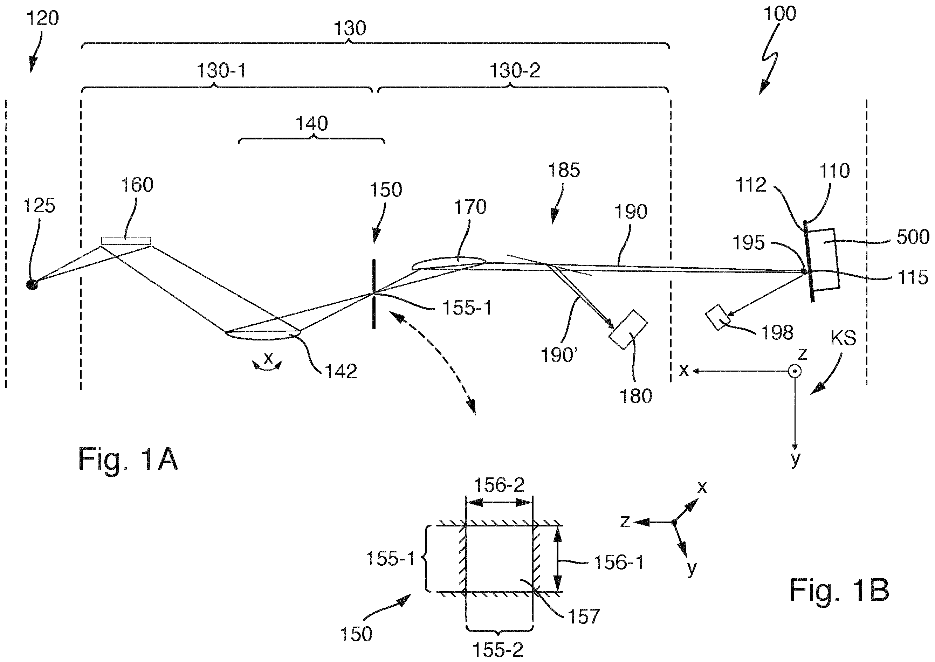

In den Fig. 1A bis 4 ist ein rechtshändiges kartesisches xyz-Koordinatensystem KS angegeben, aus dem sich die jeweiligen Lagebeziehungen der in den Figuren dargestellten Komponenten direkt oder annäherungsweise ergeben. Beispielsweise verläuft in Fig. 1 die x-Richtung nach links, die y-Richtung nach unten und die in z-Richtung senkrecht zur Zeichnungsebene aus dieser heraus, so dass die Draufsicht der Fig. 1 eine Darstellung in der x-y-Ebene repräsentiert. Bei einer bevorzugten Anordnung im Raum ist die x-y-Ebene eine horizontale Ebene.

Die Fig. 1A zeigt stark vereinfacht Komponenten eines ersten Ausführungsbeispiels eines EUV-Reflektometers 100 bzw. einer Messvorrichtung 100 zur Messung der Reflektivität eines für EUV-Strahlung reflektierend wirkenden Prüfling 110 in Abhängigkeit von der Wellenlänge der EUV-Strahlung und vom Einfallswinkel der EUV-Strahlung auf eine reflektierende Oberfläche 112 des Prüflings 110.

Beim Prüfling kann es sich beispielsweise um einen Spiegel für ein EUV-Lithografieobjektiv handeln, der eine generell konkav oder konvex gekrümmte reflektierende Oberfläche 112 aufweist. Die reflektierende Oberfläche kann sphärisch oder rotationssymmetrisch asphärisch gekrümmt sein oder als Freiformfläche ohne Rotationssymmetrie gestaltet sein.

Das EUV-Reflektometer erlaubt es unter anderem, den Reflexionsgrad des Prüflings bei unterschiedlichen Wellenlängen in einem vorgegebenen Wellenlängenbereich von extrem ultravioletter (EUV)-Strahlung zu messen. Damit sind hier vorzugsweise Wellenlängen im Bereich von 6 nm bis 20 nm, insbesondere von 8 nm bis 20 nm gemeint.

Der Reflexionsgrad ergibt sich dabei aus dem Verhältnis zwischen der Intensität der reflektierten Strahlung, die mithilfe eines Detektors 198 (z.B. Fotodiode) gemessen wird, und der Intensität der einfallenden Strahlung, deren Größe mithilfe von Signalen eines Referenzdetektors 180 bestimmt werden kann. Der vorgegebene Wellenlängenbereich kann zum Beispiel von ungefähr 6 nm bis ungefähr 20 nm reichen.

Die Messungen können für Einfallswinkel im Bereich zwischen 0° und 90° (ohne die Grenzwerte) durchgeführt werden, wobei für senkrechten Strahlungseinfall (0° Einfallswinkel) und parallel zur Oberfläche verlaufenen Strahlungseinfall (90° Einfallswinkel) konstruktionsbedingt keine Messwerte erfassbar sind.

Zum betriebsfertig konfigurierten EUV-Reflektometer gehört eine EUV-Strahlungsquelle 120, die im Ausführungsbeispiel einen gepulsten Laser umfasst, dessen Laserstrahl mit einer nicht dargestellten Fokussieroptik auf ein Gold-Target oder ein anderes geeignetes Material fokussiert wird. Der Laserstrahl erzeugt bei der Oberfläche des Targets ein Plasma, welches im EUV-Bereich ein quasi kontinuierliches Spektrum elektromagnetischer Strahlung emittiert. Das Plasma bildet einen Quellfleck bzw. Emissionsfleck 125, der die EUV-Strahlung aussendet. Eine solche Plasmastrahlenquelle wird auch als LPP-Quelle bezeichnet, wofür LPP für "laser produced plasma" steht. Alternativ können auch andere EUV-Strahlungsquellen verwendet werden, die ein diskretes oder ein quasi kontinuierliches Spektrum elektromagnetischer Strahlung im EUV-Bereich emittieren, beispielsweise eine DPP-Quelle. Hier steht "DPP" für "discharge produced plasma."

Ein Anteil der vom Quellfleck 125 emittierten EUV-Strahlung durchtritt eine nicht dargestellte Eingangsblende einer Strahlformungseinheit 130, die dazu konfiguriert ist, die EUV-Strahlung der EUV-Strahlungsquelle 120 zu empfangen und daraus einen Messstrahl 190 zu erzeugen, der im Betrieb der Messvorrichtung 100 am prüflingsseitigen Ende auf die reflektierende Oberfläche 112 des Prüflings 110 trifft und dort an einer vorgesehenen Messstelle bzw. einem vorgesehenen Messort 115 einen Messfleck 195 bildet. Der Messfleck ist der durch den Messstrahl ausgeleuchtete Bereich auf der Prüflingsoberfläche und hat häufig einen Durchmesser in einer Größenordnung von 0,5 mm. Das Größenverhältnis zwischen Quellfleck 125 und Messfleck 195 wird wesentlich durch den Abbildungsmaßstab der Strahlformungseinheit 130 bestimmt. Diese wirkt vorzugsweise vergrößernd, z.B. im Maßstab 1:10. Auch andere Vergrößerungen sind möglich, z.B. im Bereich von 5 bis 15.

Zum Einstellen der für die Messung genutzten Wellenlänge des Messstrahls 190 umfasst die Strahlformungseinheit 130 einen Monochromator 140, der als Gittermonochromator bzw. dispersiver Monochromator ausgelegt ist. Der Monochromator 140 umfasst ein konkav gekrümmtes Reflexionsgitter 142 und eine dem Reflexionsgitter nachgeschaltete Blendenanordnung 150. Die in Fig. 1B in anderer Ansicht gezeigte Blendenanordnung 150 weist einen ersten Austrittsspalt 155-1 auf, dessen Spaltbreite (erste Spaltbreite 156-1) stufenlos einstellbar ist. Abweichend von der schematischen Darstellung in Fig. 1A ist die Ebene, in der die Blendenanordnung 150 liegt, im Wesentlichen senkrecht zur Hauptstrahlrichtung des Messstrahls beim Durchtritt durch die Blendenöffnung ausgerichtet.

Die mit geradlinigen Gitterlinien versehene reflektierende Oberfläche des Reflexionsgitters 142 ist meridional zylindrisch gekrümmt. Dies bedeutet, dass die Zylinderachse des generierenden Kreiszylinders im Wesentlichen senkrecht zur Einfallsrichtung des Messstrahls 190 orientiert ist.

Das Reflexionsgitter weist im Beispielsfall eine Krümmung in der xy-Ebene auf, während es in der zy-Ebene plan ist.

Das Reflexionsgitter 142 ist um eine zur Zylinderachse parallele Schwenkachse verschwenkbar, so dass in Abhängigkeit vom Schwenkwinkel gebeugte Strahlung mit unterschiedlichen Wellenlängen zum ersten Austrittsspalt 155-1 gelangt und durch diesen hindurch als Messstrahl definierter Wellenlänge zum Prüfling gelangt.

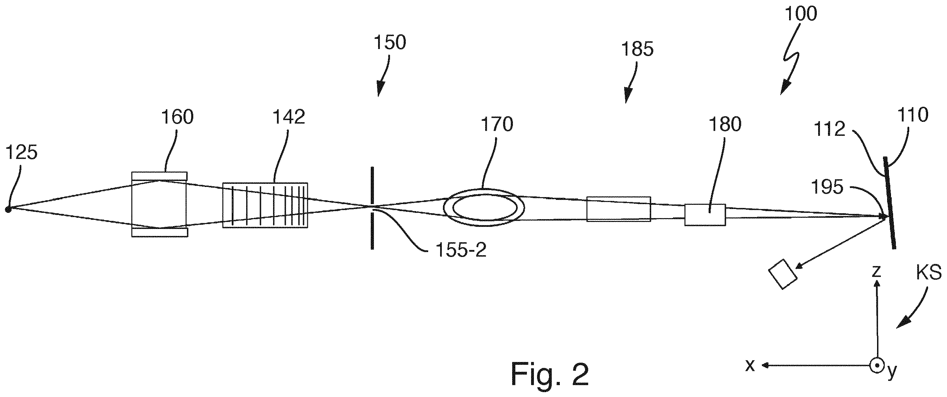

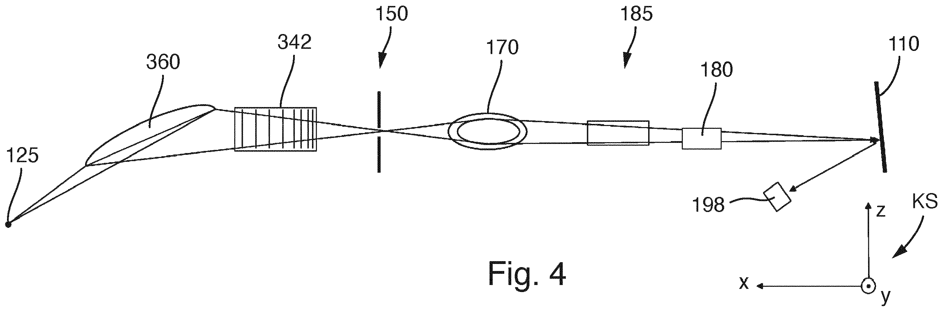

Das konkav gekrümmte Reflexionsgitter ist als VLS-Gitter ausgelegt, also als Gitter mit variablem Linienabstand bzw. mit variabler Liniendichte. Die Variation der Linienabstände über den genutzten Oberflächenbereich ist so ausgelegt, dass auch bei kurzem Abstand zum nachgeschalteten Austrittsspalt eine hohe spektrale Auflösung des Messstrahls bei unterschiedlichen angestrebten Wellenlängen erreicht werden kann. Wie in den Fig. 2 und 4 schematisch gezeigt, nimmt dazu die Liniendichte von der vorne liegenden Eintrittsseite zur hinten liegenden Austrittsseite kontinuierlich zu, was für eine Nutzung der negativen ersten Ordnung günstig ist.

Im Strahlengang vor dem Reflexionsgitter 142, also zwischen dem Quellfleck 125 und dem Reflexionsgitter 142, ist ein vorderes Reflexionselement 160 angeordnet. Dieses empfängt unmittelbar die vom Quellfleck 125 kommende divergente EUV-Strahlung und reflektiert sie in Richtung des Reflexionsgitters 142. Das vordere Reflexionselement 160 ist als sagittal planzylindrisches Reflexionselement ausgelegt. Die konkav zylindrisch gekrümmte Reflexionsfläche ist in Bezug auf die x-y-Ebene nicht gekrümmt bzw. plan, so dass eine Schnittlinie der Reflexionsfläche mit der y-x-Ebene eine gerade Linie ergibt. In einer Richtung senkrecht zur Einfallsebene bzw. quer zur Einfallebene ist die Reflexionsfläche konkav zylindrisch gekrümmt. Dadurch wirkt das vordere Reflexionselement 160 in der Fig. 2 dargestellten, im Beispielsfall vertikal ausgerichteten x-z-Ebene fokussierend. Die ungekrümmte Richtung kann, wie in Fig. 1 schematisch dargestellt, im Wesentlich parallel zu x-Richtung verlaufen. Vorzugsweise ist jedoch diese nicht gekrümmte Richtung gegenüber der x-Richtung um ca. 10° bis 20° so geneigt, dass die vom Quellfleck 125 kommende EUV-Strahlung auf die reflektierende Oberfläche mit Einfallswinkeln im Bereich von beispielsweise 70° bis 80° auftrifft. Dadurch kann ein guter Kompromiss zwischen relativ hoher Reflektivität des vorderen Reflexionselements einerseits und relativ kompakter Baulänge in der x-Richtung andererseits erzielt werden.

Das vordere Reflexionselement 160 bildet gemeinsam mit dem unmittelbar nachgeschalteten Reflexionsgitter 142 ein erstes Teilsystem 130-1 der Strahlformungseinheit 130. Das erste Teilsystem ist so ausgelegt, dass im Bereich der Blendenanordnung 150 ein erster Zwischenfokus in einer ersten Richtung (parallel zur y-Richtung) und ein zweiter Zwischenfokus in einer zur ersten Richtung senkrechten zweiten Richtung (parallel zur z-Richtung) erzeugt werden kann. Dies ist anhand der Fig. 1 und 2 gut erkennbar, wobei Fig. 1 den Zwischenfokus in der ersten Richtung und Fig. 2 den Zwischenfokus in der zweiten Richtung jeweils im Bereich der Blendenanordnung 150 zeigt.

Die Blendenanordnung 150 hat zusätzlich zu dem ersten Austrittsspalt 155-1, der sich mit gleichmäßiger Spaltbreite im Wesentlichen in z-Richtung erstreckt, einen zweiten Austrittsspalt 155-2, der sich mit gleichmäßiger Spaltbreite senkrecht dazu ungefähr in y-Richtung erstreckt und eine in z-Richtung gemessene zweite Spaltbreite 156-2 hat, die ebenfalls stufenlos einstellbar ist. Die beiden Austrittsspalte liegen in Strahldurchtrittsrichtung sehr eng (z.B. weniger als 1 mm) hintereinander und wirken somit nahezu in einer gemeinsamen Ebene. Die Blendenanordnung 150 erzeugt somit eine rechteckige Blendenöffnung 157 variabel einstellbarer Breite und Höhe (vgl. Fig. 1B).

Das erste Teilsystem 130-1, bestehend aus dem ersten Reflexionselement 160 und dem Reflexionsgitter 142, ist somit ein abbildendes Teilsystem, welches eine Zwischenabbildung in zwei zueinander senkrechten Richtungen erzeugt. Das im Bereich der Blendenordnung liegende "Zwischenbild" des Quellflecks kann mit Hilfe der Blendenanordnung 150 in zwei zueinander senkrechten Richtungen begrenzt werden.

Die Strahlformungseinheit 130 umfasst weiterhin ein hinteres Reflexionselement 170, welches im Strahlengang zwischen der Blendenanordnung 150 und dem Austritt des Messstrahls 190 in Richtung Prüfling 110 angeordnet ist. Das hintere Reflexionselement ist im Beispielsfall das einzige abbildende reflektive optische Element des zweiten Teilsystems 130-2, welches die Intensitätsverteilung in der rechteckförmigen Blendenöffnung 157 auf die Oberfläche 112 des Prüflings abbildet. Das hintere Reflexionselement 170 ist hierzu als ellipsoidales Reflexionselement in einer ersten Krümmung in einer ersten Richtung (parallel zur z-Richtung) und einer zweiten Krümmung in einer dazu senkrechten zweiten Richtung (x-Richtung) ausgebildet. Die Krümmungen sind in der Regel unterschiedlich. Durch die ellipsoidale Gestalt der Reflexionsfläche des hinteren Reflexionselementes 170 wirkt dieses in zwei zueinander orthogonalen Ebenen refokussierend, so dass sich die Intensitätsverteilung der im Bereich der durch die Austrittsspalte begrenzten Blendenöffnung im Bereich des Messflecks 195 im Wesentlichen wiederfindet.

Die Ausdehnung des mit EUV-Strahlung beaufschlagten Bereichs im Bereich des Messflecks 195 kann also bei diesem Ausführungsbeispiel mithilfe der Blendenanordnung 150 in zwei zueinander senkrechten Richtungen scharf begrenzt und stufenlos eingestellt werden.

Die Strahlformungseinheit 130 des Ausführungsbeispiels besteht aus einem ersten Teilsystem 130-1, das eine Zwischenabbildung des Quellflecks 125 im Bereich der rechteckförmigen Blendenöffnung 157 der Blendenanordnung 150 erzeugt, sowie aus einem der Blendenordnung 150 nachgeschaltet zweiten Teilsystem 130-2, das als einziges abbildendes optisches Element das als ellipsoidales Reflexionselement ausgebildete hintere Reflexionselement 170 enthält und im Bereich des Messflecks ein annäherndes Abbild des ausgeleuchteten Bereichs der rechteckigen Blendenöffnung 157 bildet.

Die Strahlformungseinheit 130 hat somit nur drei mit gekrümmten Reflexionsflächen versehene optische Elemente, wodurch der Lichtverlust zwischen Quellfleck 125 und Messfleck 135 relativ gering gehalten werden kann.

Um unvermeidliche leichte Intensitätsschwankungen der EUV-Strahlungsquelle bei der Erfassung und Auswertung der Messergebnisse berücksichtigen und dadurch bedingte Messfehler vermeiden zu können, umfasst das EUV-Reflektometer einen außerhalb des Messstrahlengangs angeordneten Referenzdetektor 180 sowie einen Strahlteiler 185, der dazu dient, einen Anteil der auftreffenden EUV-Strahlung des Messstrahl zu dem Referenzdetektor 180 auszukoppeln und einen anderen Anteil zum Prüfling 110 durchzulassen.

Durch die mit Hilfe der Strahlformungseinheit mögliche Strahlformung mit Zwischenabbildung und justierbaren Spalten in x-Richtung und y-Richtung sind sowohl das Strahlprofil der EUV-Strahlung im Bereich des Messspots als auch die Messspotgröße auf der reflektierenden Oberfläche 112 des Prüfling 110 durch einen Benutzer einstellbar und können dadurch der Messaufgabe angepasst werden.

Die bisher beschriebenen Komponenten des EUV-Reflektometers erlauben eine stufenlose Einstellung der Wellenlänge des Messstrahls 190 über einen gewünschten Wellenlängenbereich mit Hilfe des integrierten dispersiven Monochromators 140 aus Reflexionsgitter 142 in Kombination mit dem zugeordneten Austrittsspalt.

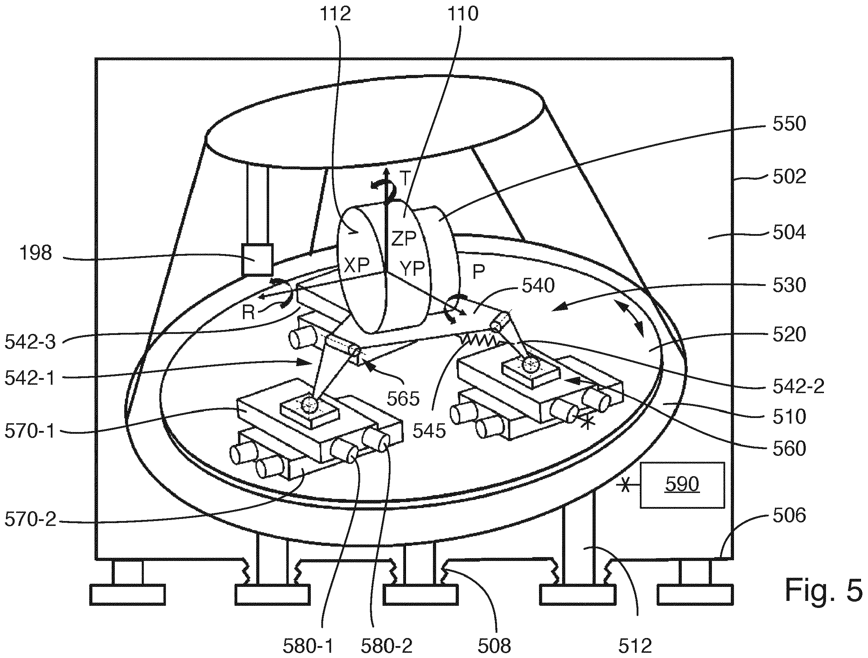

Das betriebsfertige montierte EUV-Reflektometer des Ausführungseispiels ist außerdem dazu konfiguriert, den Messort auf der Prüflingsoberfläche, also die Lage der Messstelle 115 auf der reflektierenden Oberfläche 112, sowie den Einfallswinkel bzw. den Einfallswinkelbereich des Messstrahls 190 am Messort mit hoher Genauigkeit reproduzierbar stufenlos einzustellen. Eine bevorzugte Ausführungsform einer hierfür verwendbaren Positioniervorrichtung 500 wird im Zusammenhang mit Fig. 5 später näher erläutert.

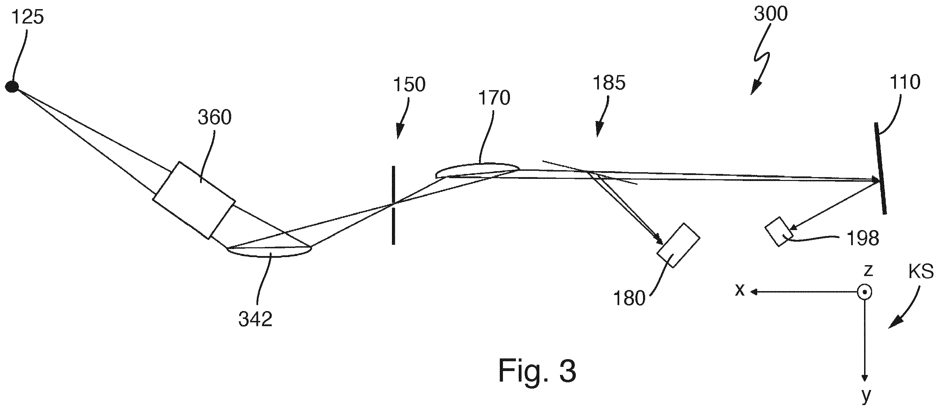

Die Fig. 3 und 4 zeigen ein zweites Ausführungsbeispiel eines EUV-Reflektometers 300, wobei Fig. 3 eine der Fig. 1 entsprechende Draufsicht in der x-y-Ebene und Fig. 4 eine der Fig. 2 entsprechende Seitenansicht in der x-z-Ebene zeigt.

Ein wesentlicher Unterschied zum ersten Ausführungsbeispiel liegt in der Ausgestaltung des vorderen Reflexionselements 360, welches das in Strahlrichtung erste optische Element der Strahlformungseinheit 130 bildet und welches die vom Quellfleck 125 der EUV-Strahlungsquelle 120 kommende EUV-Strahlung in Richtung des nachgeschalteten konkav gekrümmten Reflexionsgitters 342 umlenkt und in einer Richtung fokussiert. Während das vordere Reflexionselement 160 des ersten Ausführungsbeispiels als sagittal zylindrisches Reflexionselement ausgestaltet und angeordnet ist, ist das vordere Reflexionselement 360 des zweiten Ausführungsbeispiels als planelliptisches Reflexionselement gestaltet. Die reflektierende optische Oberfläche des planelliptischen Reflexionselements hat in einer in der x-z-Ebene liegenden Richtung die Form einer Ellipse (vgl. Fig. 4), während die reflektierende Oberfläche in einer dazu im Wesentlichen senkrechten Richtung eben verläuft (vgl. Fig. 3). Die Brennlinie bei diesem planelliptischen Reflexionselement verläuft parallel zur ebenen Richtung der reflektierenden Oberfläche, also im Beispiel von Fig. 4 im Wesentlichen parallel zur y-Richtung. Die übrigen Komponenten können identisch oder annähernd identisch zum ersten Ausführungsbeispiel sein, weshalb sie mit den gleichen Bezugszeichen bezeichnet sind. Es wird insoweit auf die dortige Beschreibung verwiesen.

Anhand der Fig. 5 wird nun ein Ausführungsbeispiel einer Positioniervorrichtung 500 erläutert, die dazu konfiguriert ist, den zu messenden Prüfling 110 zu halten und in Bezug auf den Messstrahl 190 in mehreren Freiheitsgraden derart zu positionieren, dass im Betrieb des EUV-Reflektometers der Messstrahl an einer vorgebbaren Messstelle bzw. einer vorgebbaren Messort 115 im Bereich eines Messflecks 195 und einem vorgebbaren Einfallswinkel bzw. Einfallswinkelbereich auf der reflektierenden Oberfläche 112 auftrifft.

Alle beweglichen mechanischen Komponenten der Positioniervorrichtung 500 sind im Inneren einer von einem luftdicht abschließbaren Gehäuse 502 umschlossen Vakuumkammer 504 untergebracht, die mit Hilfe angeschlossener Pumpen evakuiert werden kann. Für die Steuerung der Bewegungsachsen ist eine Steuereinheit 590 vorgesehen, die die Antriebe der Bewegungsachsen steuert und für diese Steuerung auch Signale von Sensoren (z.B. Weggeber, Winkelgeber etc.) verarbeitet.

Die Positioniervorrichtung 500 hat ein Basisgestell 510, welches alle beweglichen Komponenten der Positioniervorrichtung trägt. Das Basisgestell 510 ruht auf einer Vielzahl von Stellfüßen 512, die einzeln höhenverstellbar sind und das Basisgestell 510 mit Abstand oberhalb der Bodenplatte 506 der Vakuumkammer halten. Die Stellfüße greifen berührungsfrei durch Durchführungsöffnungen in der Bodenplatte 506 des Vakuumgehäuses. Der Freiraum um die Stellfüße ist mithilfe von Membranbälgen 508 oder anderen schwingungsentkoppelnd wirkenden Dichteinrichtungen gegenüber dem Gehäuse 502 der Vakuumkammer mechanisch entkoppelt. Die Stellfüße können auf einem Hallenboden aufgestellt werden. Alle mechanischen Komponenten der Positioniereinrichtung sind somit mechanisch gegenüber eventuellen Schwingungen des Gehäuses 502 der Vakuumkammer mechanisch entkoppelt. Die Stellfüße werden direkt unter zwei konzentrischen Axiallagern des vertikal rotierbaren Grundträgers angeordnet, um Drehmomente zu vermeiden, die bei Gewichtsverlagerung oberhalb des rotierbaren Grundträgers z.B. zu einer Verkippung dessen vertikaler Rotationsachse führen können.

Das Basisgestell 510 trägt einen Grundträger 520 in Form eines Drehtellers 520, der mithilfe eines nicht dargestellten Drehantrieb um eine vertikale Achse T drehbar ist. Die zugehörige Bewegungsachse wird als Theta-Achse bezeichnet. Die Achse T ist raumfest und verläuft parallel zur z-Achse des in den Fig. 1 bis 4 gezeigten Koordinatensystem KS des EUV-Reflektometers.

Der Drehteller 520 trägt Komponenten eines parallelkinematischen Mehrachssystems 530, welches sechs Aktoren aufweist, die auf eine gemeinsame Plattform 540 wirken. Die auch als Sattel-Einheit bezeichnete Plattform 540 kann mithilfe der Aktoren in mehreren linearen und rotatorischen Achsen im Raum bewegt werden. Genauer gesagt gibt es drei translatorische und drei rotatorische Bewegungsfreiheitsgrade.

Die Plattform 540 trägt eine Haltevorrichtung 550, die zum Halten des zu messenden Prüflings 110 konfigurierte Halteelemente aufweist. Die Plattform 540 trägt auch einen nicht dargestellten Drehantrieb zum Drehen der Haltevorrichtung um eine Drehachse R. Die zugehörige Bewegungsachse wird hier als Rho-Achse bezeichnet. Es ist ersichtlich, dass sich die Ausrichtung der R-Achse bzw. der Rho-Achse im Raum in Abhängigkeit von der Stellung der Plattform 540 ändern kann.

Das parallelkinematische Mehrachssystem 530 weist eine Tripod-Anordnung mit genau drei Beinen 542-1, 542-2, 542-3 auf, die im Wesentlichen in einer Dreiecksordnung relativ zueinander angeordnet sind. Jedes der Beine hat eine feste, also nicht veränderliche Länge und ist mit seinem der Plattform 540 zugewandten zweiten Ende mithilfe einer zweiten Gelenkanordnung 565 mit der Plattform 540 beweglich gekoppelt. Die zweite Gelenkanordnung ist jeweils als einfaches Drehgelenk ausgestaltet, welches es erlaubt, dass sich das angekoppelte Bein gegenüber der Plattform 540 um eine Schwenkachse 566 verschwenken lässt, die je nach Orientierung der Plattform horizontal oder in einem mehr oder weniger kleinen Winkel relativ zur Horizontalen orientiert ist.

Die der Plattform 540 abgewandten unteren Enden der Beine stützen sich jeweils über eine erste Gelenkanordnung 560 mit einem dreiachsig beweglichen Kugelgelenk auf der Oberseite eines nach Art eines Kreuztischs aufgebauten Zweiachssystems ab. Anstelle eines Kugelgelenks kann z.B. auch ein auf einem Drehlager angeordneten Kardangelenk verwendet werden. Genauer gesagt, befinden sich die ersten Gelenkanordnungen 560, die drei rotative Freiheitsgrade bieten, jeweils auf einem Schlitten 570-1, der in einer senkrecht zur Drehachse T des Drehtellers bzw. parallel zur Tragfläche des Drehtellers 520 verlaufenden horizontalen Bezugsebene in zwei zueinander senkrechten Richtungen gesteuert verfahrbar ist. Die basisseitigen Gelenkpunkte der Beine 542-1, 542-2, 542-3 der Tripod-Anordnung sind somit jeweils unabhängig voneinander in verschiedene Positionen in einer Bezugsebene verfahrbar.

In der dargestellten Variante sind die oberen Schlitten 570-1, die jeweils an ihrer Oberseite die Gelenkanordnung 560 zur Ankopplung der unteren Enden der Beine tragen, parallel zu einer yp-Richtung des Koordinatensystems der Positioniervorrichtung verfahrbar. Die oberen Schlitten werden von unteren Schlitten 570-2 getragen, die auf Führungen an der Oberseite des Drehtellers 520 laufen. Die unteren Schlitten 570-2 sind jeweils horizontal in einer zur yp-Richtung senkrechten xp-Richtung des Koordinatensystems der Positioniervorrichtung verfahrbar. Die Orientierung dieser horizontalen Richtungen im Raum ändert sich mit der Drehung um die Drehachse T (mittels der Theta-Achse). Die zur xp-Richtung und zur yp-Richtung orthogonale zp-Richtung verläuft parallel zur Drehachse T des Drehtellers 530.

Für jede der Schlittenbewegungen bzw. für jeden dieser Schlitten 570-1, 570-2 sind jeweils zwei separate Antriebsmotoren 580-1, 580-2 vorgesehen, die zugehörige Spindeln drehen und auf die gleiche translatorische Bewegungsachse wirken. Dadurch kann unter anderem erreicht werden, dass jeder der vorzugsweise zueinander identischen Antriebsmotoren nur eine relativ geringe Antriebsleistung erbringen muss und sich dementsprechend kaum erwärmt. Somit können Probleme unzureichender Wärmeabfuhr, wie sie bei im Vakuum angeordneten Antriebsmotoren entstehen können, zuverlässig vermieden werden.

Die Tripod-Anordnung verteilt die Last und die Bewegung der Last des Prüflings auf eine Vielzahl von Antrieben, die größer ist als die Anzahl der benötigten Freiheitsgrade. Mithilfe der jeweils paarweise ansteuerbaren Antriebe 580-1, 580-2 für die Schlitten können die Fußpunkte der Beine jeweils synchron oder unabhängig voneinander in der xp-Richtung und yp-Richtung verfahren werden. Eine Neigung des Prüflings um eine parallel zur xp-Richtung verlaufende horizontale Achse P kann beispielsweise dadurch erreicht werden, dass der im Bild links vorne angeordnete Gelenkpunkt des Beins 542-1 in xp-Richtung nach außen verfahren wird, während die unteren Gelenkpunkte der anderen beiden Beine jeweils in ihrer Position verbleiben. Damit wird im Ergebnis eine rotatorische Bewegungsachse realisiert, die hier als Phi-Achse bezeichnet wird. Dadurch kippt die Plattform 540 mit dem davon getragenen Prüfling nach vorne, was einer Rotation um die Achse P entspricht. Werden alle oberen Schlitten 570-1 synchron und mit gleichem Fahrweg in xp- oder yp-Richtung verfahren, kann die gesamte Plattform um den Fahrweg in die entsprechende Richtung verfahren werden, ohne dass sich die Neigung des Prüflings (um die P-Achse) oder die Drehstellung des Prüflings 110 (um die R-Achse) verändert wird. Eine Verlagerung des Prüflings 110 in die vertikale zp-Richtung kann dadurch erreicht werden, dass die der Basis zugewandten Gelenkpunkte der Beine synchron nach innen verfahren werden (dies ergibt ein Anheben der Plattform und des Prüflings nach oben) oder synchron nach außen gefahren werden (dies ergibt eine Absenkung des Prüflings nach unten).

Abhängig von der Winkellage des Prüflings können auf die Antriebsstränge der Tripod-Anordnung (Antriebsmotor, Antriebsspindel und Spindelmutter, Spindelendlager) unterschiedliche statische und dynamische Kräfte in axiale Richtung wirken. Zu Minderung dieser Kraftkomponenten können Federpakete (z.B. Bündel von Federn, in dem die Gesamtfederkonstante durch Erhöhen bzw. Reduzieren der Federanzahl angepasst werden kann) an die Tripod-Gelenke angebracht und mit der beweglichen Plattform 540 der Tripod-Anordnung verbunden werden. Dadurch können die anzubringenden Motordrehmomente reduziert werden. In Fig. 5 ist beispielhaft eine Federanordnung 545 gezeigt, die einerseits am rechts sichtbaren Bein 542-2 und andererseits an der Plattform 540 angreift.

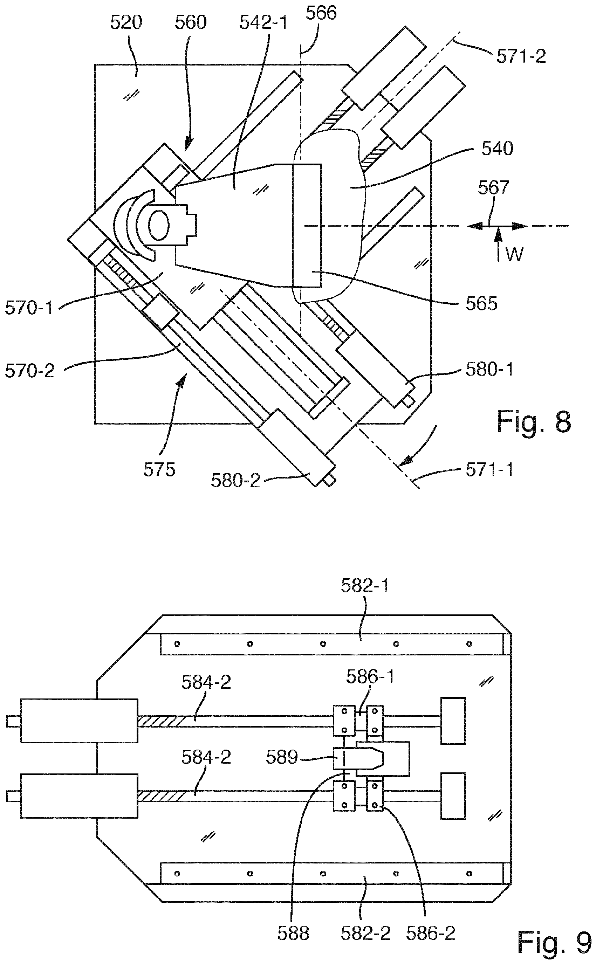

Anhand der Fig. 8 und 9 werden Maßnahmen erläutert, die einzeln oder in Kombination dazu beitragen können, auch bei relativ großen und schweren Prüflingen eine schnelle Positionierung mit hoher Positioniergenauigkeit und hoher Wiederholungsgenauigkeit der Positionierung im Vakuum zu erreichen. Dazu zeigt Fig. 8 eine Draufsicht auf den Bereich eines Tripod-Beins, welches sich über ein Kugelgelenk auf dem oberen Schlitten eines Kreuzschlittens abstützt. Fig. 9 zeigt eine schematische Draufsicht auf zwei Antriebsmotoren für einen (nicht dargestellten) Schlitten, wobei die Antriebsmotoren einen Parallelantrieb bilden, der eine encodierte Deichsel zur aktiven Korrektur der Deichselorientierung aufweist.

Das in der Draufsicht von Fig. 8 erkennbare erste Bein 542-1 der Tripod-Anordnung ist mithilfe einer zweiten Gelenkanordnung in Form eines einachsigen Schwenkgelenks 565 an die Plattform 540 angekoppelt. Das Schwenkgelenk definiert eine Schwenkachse 566, um die das erste Bein relativ zur Plattform 540 verschwenkt werden kann. Das gegenüberliegende untere Ende des Beins 542-1 mit dem Kugelgelenk im Bereich der ersten Gelenkanordnung 560 bewegt sich dabei in einer senkrecht zur Schwenkachse 566 orientierten Schwenkebene, die die Bewegungsebene des Schlittens 570-1 (Bezugsebene) in einer Linie schneidet, die diejenige Richtung definiert, in der sich das Beinende mit dem Kugelgelenk verlagert, wenn das erste Bein 542-1 verschwenkt wird. Diese Richtung wird hier als Verlagerungsrichtung 567 bezeichnet.

Der Kreuztisch 575, der das Kugelgelenk der ersten Gelenkanordnung 560 trägt, umfasst den ersten Schlitten 570-1, auf dessen Oberseite das Kugelgelenk angeordnet ist, sowie einen darunter angeordneten zweiten Schlitten 570-2, der den ersten Schlitten 570-1 trägt. Die geradlinige Verfahrrichtung 571-1 des ersten Schlittens und die geradlinige Verfahrrichtung 571-2 des zweiten Schlittens verlaufen orthogonal zueinander parallel zur Bezugsebene und schließen mit der Verlagerungsrichtung 567 der Schwenkbewegung des Beins jeweils einen Winkel W von 45° ein. In anderen Worten: die Schlitten 570-1 und 570-2 sind horizontal und zueinander senkrecht angeordnet. Außerdem sind sie relativ zum jeweiligen Tripodbein 542-1, 542-2 bzw. 542-3 so angeordnet, dass die Projektion der Längsrichtung eines Beins (Verbindung zwischen Kugelgelenk und Sattelgelenk) auf die Horizontale unter ca. 45° zur Bewegungsrichtung der Schlitten 570-1 und 570-2 liegt.

Durch diese Anordnung kann erreicht werden, dass die maximal wirkenden Kräfte im Bereich der Bewegung dieses Beins der Tripod-Anordnung im Mittel etwa zu gleichen Teilen auf axiale und nicht-axiale Richtungen verteilt werden, wobei die "axialen Richtungen" den Verfahrrichtungen 571-1, 571-2 der beiden Schlitten des Kreuztischs entsprechen. Somit wirkt ein Teil des Gewichts, welches auf der ersten Gelenkanordnungen lastet, als Querkraft zu den Führungsschienen der Linearführungssysteme und ein mehr oder weniger gleich großer Teil parallel zu den Verfahrrichtungen der Schlitten. Dadurch werden die Schlittenantriebe 580-1, 580-2 entlastet. Durch den Einsatz geeigneter Materialpaarungen in allen Lagern und Gelenken können leichtlaufende, verschleißsichere Bewegungssysteme geschaffen werden.

Vorzugsweise sind Lager oder andere Komponentenpaarungen vorgesehen, bei denen Elemente aus Keramik oder Elemente aus Polytetrafluorethylen (PTFE)-Derivaten mit Elementen aus Edelstahl kombiniert sind.

Wie oben bereits erwähnt, sind für jede der Schlittenbewegungen der Schlitten des Kreuztisches zwei separate Antriebsmotoren (zum Beispiel Antriebsmotoren 580-1 und 580-2) vorgesehen. Fig. 9 zeigt ein solches Antriebssystem ohne den Schlitten, der auf parallel zueinander verlaufenden Führungsschienen 582-1, 582-2 gleitet oder abrollt. Jeder der Antriebsmotoren 580-1, 580-2 dreht im Betrieb eine Trapezgewindespindel 584-1, 584-2, auf der jeweils eine Spindelmutter 586-1, 586-2 läuft. Diese ist bei fertig montiertem Antriebssystem an der Unterseite des angetriebenen Schlittens montiert.

Die Spindelmuttern der zu den beiden Antriebsmotoren 580-1 und 580-2 gehörigen Spindeln sind durch eine Deichselbaugruppe 588 mit geeigneten Gelenken verbunden Die Deichselbaugruppe verhindert ein Verklemmen der Spindelmuttern auf den Spindeln 584-1 und 584-2 bei leicht asynchronem Antrieb der beiden Motoren passiv. Die Verdrehung der Deichselbaugruppe wird durch einen Encoder 589 registriert, so dass die Motoren auch aktiv angesteuert werden können, um eine Deichselverdrehung zu korrigieren.

Die Spindelmuttern 586-1, 586-2 sind somit mechanisch über die Deichsel 588 gekoppelt. Ein an der Deichsel 588 montierter Encoder 589 erfasst die Deichselorientierung, die idealerweise senkrecht zur Verfahrrichtung dieses Parallelantriebssystems orientiert sein sollte. Sollte einer der Antriebe 580-1, 580-2 dem jeweils anderen voreilen oder nacheilen, so ergibt sich im Bereich der Deichsel eine Schrägstellung bzw. eine Änderung der Deichselorientierung. Diese wird mit dem Encoder erfasst und in Signale umgewandelt, die durch die Steuerung genutzt werden, um der Fehlorientierung der Deichsel 588 entgegenzuwirken und die Deichselorientierung aktiv zu korrigieren. Dadurch wird ein ungehemmter, leichter Lauf des Schlittens dieses Antriebssystems auch bei großer und gegebenenfalls ungleichmäßiger Belastung des Schlittens gefördert, wodurch auch die Positioniergeschwindigkeit und die Positioniergenauigkeit positiv beeinflusst werden können.

Es sei noch erwähnt, dass der Detektor 198 zum Erfassen des reflektierten Messstrahls ebenfalls beweglich gelagert ist, so dass der Detektor abhängig von der räumlichen Lage des Prüflings 110 jeweils so in eine Messposition verfahren werden kann, dass die von der Prüflingsoberfläche 112 reflektierte Strahlung komplett und ohne Überstrahlung des Detektors auf die sensitive Fläche des Detektors 198 trifft. Bei dem Detektor kann es sich beispielsweise um eine Silizium- oder Germanium-Fotodiode handeln. Auch Diodenarrays mit zwei oder mehr Fotodioden sind möglich.

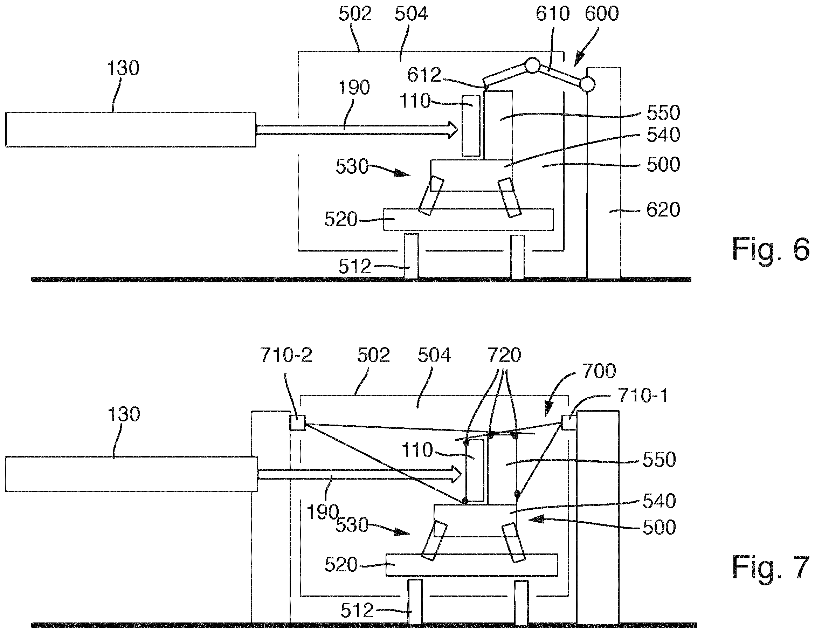

Anhand der Fig. 6, 7 und 10 werden nun Beispiele für gesonderte, last-unabhängig arbeitende Messsysteme erläutert, die bei manchen Ausführungsformen vorgesehen sind, um unabhängig von den Encodern und sonstigen Sensoren in den Antriebssträngen der Positioniervorrichtung 500 die Position und Orientierung des Prüflings 110 im Raum, und insbesondere in Bezug auf die Strahlformungseinheit 130 bzw. den Messstrahl 190 exakt zu bestimmen. Damit können systematisch Positionsgenauigkeiten des Prüflings von 100 µm oder weniger (z.B. bis herunter zu 30 µm) und/oder Orientierungsgenauigkeiten im Bereich von weniger als einem 1/100° (z.B. bis herunter zu 5/1000°) systematisch erreicht werden.

Das unabhängige Messsystem 600 in Fig. 6 arbeitet elektromechanisch und weist einen als Gelenkarm ausgestalteten Messarm 610 auf, der von einem Ständer 620 getragen wird, welcher außerhalb der Vakuumkammer angeordnet und fest auf dem Boden (z.B. Granitplatte) montiert ist. Der Gelenkarm 610 weist an seinem in die Vakuumkammer 504 reichenden vorderen Ende einen Taster 612 auf, der an einer vorgesehenen Stelle der Halteeinrichtung 550 oder am Prüfling 110 aufgesetzt sein kann. Der Taster 612 ist über den Gelenkarm 610 mit einem raumfesten Fixpunkt (zum Beispiel dem Granitsockel, auf dem der Träger 620 steht) verbunden. Der Messarm ist mit Sensoren ausgestattet, die es erlauben, die Position der Tastspitze des Tasters 612 in Bezug auf den Fixpunkt exakt zu bestimmen. Zu den Sensoren können beispielsweise Längeninterferometer und/oder Encoder in den Gelenken gehören. Mit Hilfe des ortsfesten Messsystems 600 kann damit unabhängig von den Informationen, die die Aktoren und Sensoren der Positioniervorrichtung 500 bieten, die räumliche Lage des Prüflings 110 im Raum in Bezug auf die Strahlformungseinheit 130 in fünf Freiheitsgraden exakt bestimmt werden.

Beim Ausführungsbeispiel von Fig. 7 ist ein ortsfestes Messsystem 700 vorgesehen, welches mindestens zwei Kameras 710-1, 710-2 aufweist, die in das Innere der Vakuumkammer gerichtet sind und den Bereich der Haltevorrichtung 550 und des darin gehaltenen Prüflings 110 erfassen können. An der Haltevorrichtung 550 und/oder dem Prüfling 110 sind jeweils zwei, drei oder mehr Referenzmarken 720 befestigt, deren Position mit Hilfe der Kamera und des daran angeschlossenen Bildverarbeitungssystems mit hoher Präzision ermittelt werden kann. Aus den Positionsinformationen der einzelnen Referenzmarken kann über Triangulation die räumliche Lage des Prüflings im raumfesten Koordinatensystem exakt bestimmt werden. Die Kameras können komplett innerhalb der Vakuumkammer 504 angeordnet sein, so dass nur elektrische Signale zur Bildverarbeitung nach außen geführt werden müssen. Im Beispielsfall sind die Kameras außerhalb des Vakuums angeordnet und durch Flansche mit Sichtfenstern hindurch auf den Prüfling 110 und die Haltevorrichtung 550 gerichtet.

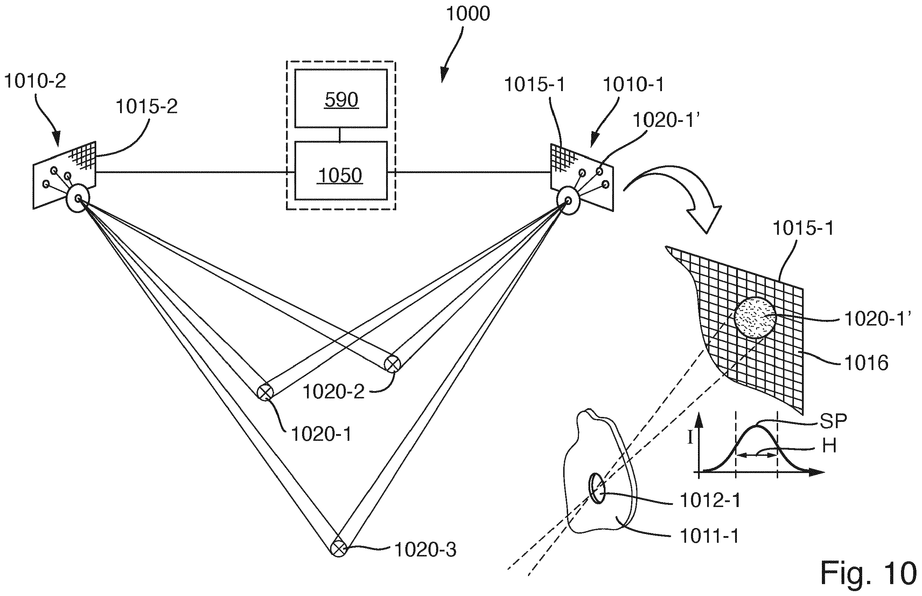

Anhand von Fig. 10 wird ein Ausführungsbeispiel eines raumfesten externen In-situ-Messsystems 1000 beschrieben, das dem optischen Messsystems aus Fig. 7 entsprechen oder in Details davon abweichen kann. Das berührungslos arbeitende optische Messsystem 1000 weist mindestens zwei Kameras 1010-1, 1010-2 auf, die signalübertragend an die Auswerteeinheit 1050 eines Bildverarbeitungssystems angeschlossen sind. Die Auswerteeinheit ist funktionaler Bestandteil der Steuereinheit 590, an die auch die Aktoren und Sensoren der Positioniervorrichtung 500 angeschlossen sind.

Die Kameras sind derart in das Innere der (in Fig. 10 nicht dargestellten) Vakuumkammer gerichtet, dass sie den Bereich der Haltevorrichtung 550 und des darin gehaltenen Prüflings 110 erfassen können. Um auch heutzutage schon übliche große Optikkomponenten und Optikkomponenten zukünftiger Generationen präzise vermessen zu können, ist das Messsystem 1000 dafür ausgelegt, in-situ alle sechs Freiheitsgrade des Prüflings und/oder der Haltevorrichtung im Vakuum über eine Entfernung von bis zu ca. 3 m in einem Messbereich von ca. 1 m und Winkeldifferenzen bis zu 360° zu bestimmen.

Es handelt sich um ein auf Fotogrammmetrie basierendes berührungsloses Messsystem. Um das gesamte Objekt mit ausreichender Genauigkeit erfassen zu können, sind die erste Kamera 1010-1 und die zweite Kamera 1010-2 unmittelbar außerhalb der Vakuumkammer direkt hinter einem nicht dargestellten Sichtfenster angeordnet, das im Beispielsfall durch eine dünne (Dicke ca. 5 µm), vakuumfeste transparente Folie gebildet wird. Wegen der Größe des Messobjekts müssen die Kameras relativ große Akzeptanzwinkel aufweisen. Um solche Messgeometrien verzerrungsfrei vermessen zu können, sind die Kameras 1010-1, 1010-2 jeweils als Lochkamera ohne Objektiv ausgeführt. So hat die erste Lochkamera 1010-1 in der der Positioniereinrichtung zugewandten vorderen Kammerwand 1011-1 ein kreisrundes Loch 1012-1, durch das Licht in die ansonsten geschlossene Kammer der Kamera einstrahlen kann. Mit Abstand hinter dem Loch bzw. der Lochblende 1012-1 ist ein zweidimensionaler Bildsensor 1015-1 der Lochkamera angebracht, dessen lichtsensitive Fläche eine Vielzahl von Pixeln 1016 in Reihen und Spalten aufweist (siehe vergrößertes Detail).

Die beiden Lochkameras 1010-1, 1010-2 sind unter einem festen Winkel zueinander mit jeweils festem Abstand zwischen Lochblende und Bildsensor angebracht. An der Haltevorrichtung 550 und/oder am Prüfling 110 sind jeweils mindestens drei Referenzmarken 1020-1, 1020-2, 1020-3 befestigt, deren Position mithilfe der mindestens zwei Lochkameras und dem daran angeschlossenen Bildverarbeitungssystem ermittelt werden kann. Die Referenzmarken sind so angeordnet, dass mindestens drei der Referenzmarken gleichzeitig im Akzeptanzbereich beider Lochkameras liegen, so dass sowohl auf dem ersten Bildsensor 1015-1 als auch auf dem zweiten Bildsensor 1015-2 ein Muster mit Bildern 1020-1' der Referenzmarken entsteht.

Als Referenzmarken werden hier aktiv leuchtende Referenzmarken in Form von lichtemittierenden Dioden mit ausreichend hoher Lichtleistung verwendet. Vorzugsweise ist die Lichtleistung so bemessen, dass die Intensitätsauflösung der LED-Bilder, die innerhalb einer Sekunde aufgenommen werden können, mindestens 12 bit beträgt. Die mit den LEDs versehenen LED-Module werden in Ultrahochvakuum-kompatibler Ausführung gefertigt.

Vorzugsweise wird der Durchmesser des Lochs der Lochblende 1012-1 so gewählt, dass die Halbwertsbreite H eines Bilds 1020-1' einer LED einem Vielfachen der Pixelgröße entspricht, beispielsweise mindestens dem Zehnfachen. Die Auswerteeinrichtung wertet die Bildinformation dann unter Ausnutzung des Effekts der Superauflösung aus. Dazu kann z.B. die Position des geometrischen Schwerpunkts SP der Intensitätsverteilung im Bild einer Referenzmarke mit sub-Pixel-Genauigkeit bestimmt werden. Dadurch kann erreicht werden, dass auch die exakte Position der zugehörigen Referenzmarke im Raum mit hoher örtlicher Auflösung ermittelt werden kann. Bei Versuchen konnte gezeigt werden, dass die relative Genauigkeit der Positionsbestimmung in der Bildauswertung bei dieser Anordnung durch Ausnutzung des Effekts der Superauflösung je nach Objektabstand ca. 3 µm bis 8 µm und die Absolutgenauigkeit ca. 30 µm betragen kann.

In allen Fällen arbeiten die Messsysteme 600 bzw. 700 oder 1000 lastunabhängig in dem Sinne, dass ihre Präzision unabhängig beispielsweise vom Gewicht des Prüflings und der dadurch auf die Positioniervorrichtung ausgeübten Belastungen bleibt. Hierdurch können systematisch hohe Anfahrgenauigkeiten für die Positionierung des Prüflings 110 sichergestellt werden. Die Signale eines ortsfesten Messsystems können unter anderem zur Berechnung der genauen Position des Messflecks sowie zur Ermittlung des Einfallswinkels des Messstrahls 190 auf die reflektierende Prüflingsoberfläche während der Messung verarbeitet werden.

## Patentansprüche

1. EUV-Reflektometer (100, 300) zum Messen der Reflektivität eines für EUV-Strahlung reflektierend wirkenden Prüflings (110) in Abhängigkeit von der Wellenlänge der EUV-Strahlung und vom Einfallswinkel der EUV-Strahlung auf eine reflektierende Oberfläche (112) des Prüflings umfassend:
eine EUV-Strahlungsquelle (120) zum Emittieren von EUV-Strahlung;
eine Strahlformungseinheit (130) zum Empfangen von EUV-Strahlung der EUV-Strahlungsquelle und zur Erzeugung eines Messstrahls (190);
eine Positioniervorrichtung (500) zum Halten des Prüflings (110) und zum Positionieren des Prüflings in Bezug auf den Messstrahl (190) in mehreren Freiheitsgraden derart,
dass im Betrieb der Messstrahl (190) an einer vorgebbaren Messstelle (115) im Bereich eines Messflecks (195) unter einen vorgebbaren Einfallswinkel auf die reflektierende Oberfläche (112) trifft,
einen für EUV-Strahlung sensitiven Detektor (198) zum Erfassen der von der reflektierenden Oberfläche (112) reflektierten EUV-Strahlung,
**dadurch gekennzeichnet, dass**
(a) die Positioniervorrichtung (500) einen mittels eines Drehantriebs um eine vertikale Drehachse (T) drehbaren Grundträger (520) aufweist, auf dem ein parallelkinematisches Mehrachssystem (530) mit einer Vielzahl von Aktoren angeordnet ist, die auf eine gemeinsame Plattform (540) wirken, welche mittels der Aktoren in drei linearen und drei rotatorischen Freiheitsgraden im Raum bewegbar ist, wobei die Plattform (540) eine Haltevorrichtung (550) zum Halten des Prüflings (110) und einen Drehantrieb zum Drehen der Haltevorrichtung um eine Drehachse (R) trägt, und
(b) der Positioniervorrichtung (500) ein von Antrieben der Aktoren unabhängiges Messsystem (600, 700, 1000) zur Bestimmung der Lage und Position des Prüflings (110) im Raum und/oder in Bezug auf den Messstrahl (190) zugeordnet ist.

2. EUV-Reflektometer (100, 300) nach Anspruch 1, **dadurch gekennzeichnet, dass** das unabhängige Messsystem als optisches Messsystem (700, 1000) ausgelegt ist und zwei oder mehr Kameras (710-1, 710-2, 1010-2, 1010-2) sowie eine Auswertungseinrichtung zur Auswertung von Bildsignalen der Kameras oder daraus abgeleiteten Signalen aufweist, wobei die Kameras auf Referenzmarken (720, 1020-1, 1020-2, 1020-3) ausgerichtet oder ausrichtbar sind, die direkt auf den Prüfling und/oder auf der Haltevorrichtung für den Prüfling befestigt sind.

3. EUV-Reflektometer (100, 300) nach Anspruch 2, **dadurch gekennzeichnet, dass** die Kameras (710-1, 710-2, 1010-1, 1010-2) außerhalb einer die Positioniereinrichtung (500) umschließenden Vakuumkammer angeordnet und durch Sichtfenster auf den Prüfling (110) und/oder die Haltevorrichtung (550) für den Prüfling gerichtet sind und/oder dass die Kameras als objektivlose Lochkameras (1010-1, 1010-2) mit einem der Positioniervorrichtung zugewandten Loch (1012-1) und einem mit Abstand hinter dem Loch angebrachten zweidimensionalen Bildsensor (1015-1) ausgebildet sind und/oder dass das Messsystem (1000) aktiv leuchtende Referenzmarken (1020-1, 1020-3, 1020-3) aufweist, insbesondere Form von lichtemittierenden Dioden (LEDs).

4. EUV-Reflektometer (100, 300) nach Anspruch 3, **dadurch gekennzeichnet, dass** das Messsystem (1000) so ausgelegt ist, dass folgende Bedingungen erfüllt sind:
(i) Es sind mindestens zwei Lochkameras (1010-1, 1010-2) vorgesehen, die unter einem festen Winkel zueinander mit jeweils festem Abstand zwischen der Lochblende (1012-1) und dem Bildsensor (1015-1) derart zueinander angeordnet sind, dass sich im Erfassungsbereich der Lochkameras jeweils mindestens drei gemeinsame Referenzmarken (1020-1, 1020-2, 1020-3) in konstanten Abständen zueinander befinden;
(ii) Der Durchmesser der Lochblende (1012-1), ein Abstand zwischen der Lochblende und dem Bildsensor (1015-1) sowie die räumliche Dichte von Pixeln (1016) des Bildsensors sind derart ausgelegt, dass die Halbwertsbreite (H) eines Bilds (1020-1`) eines über die Lochblende abgebildeten Referenzelements auf den Bildsensor (1015-1) so groß ist, dass das Bild eine Vielzahl von Pixeln (1016) des Bildsensors abdeckt, insbesondere eine Fläche von mindestens 10 X 10 Pixeln.

5. EUV-Reflektometer (100, 300) nach einem der Ansprüche 2 bis 4, **dadurch gekennzeichnet, dass** die Auswerteeinrichtung dazu konfiguriert ist, eine Bildauswertung unter Ausnutzung des Effekts der Superauflösung durchzuführen.

6. EUV-Reflektometer (100, 300) nach einem der vorhergehenden Ansprüche, **dadurch gekennzeichnet, dass** das parallelkinematische Mehrachssystem (530) eine Tripod-Anordnung mit genau drei Beinen (542-1, 542-2. 542-3) aufweist, die jeweils an einem dem Grundträger (520) zugewandten erste Ende mittels einer ersten Gelenkanordnung (560) mit dem Grundträger (520) und an einem der Plattform (540) zugewandten zweiten Ende mittels einer zweiten Gelenkanordnung (565) mit der Plattform (540) beweglich gekoppelt sind.

7. EUV-Reflektometer (100, 300) nach Anspruch 6, **dadurch gekennzeichnet, dass** die erste Gelenkanordnung (560) ein in mehreren Achsen drehbares Gelenk, insbesondere ein Kugelgelenk oder ein auf einer Drehachse angeordnetes Kardangelenk, aufweist, welches das erste Ende des Beins mit einem Schlitten (570-1) koppelt, der in einer Bezugsebene in zwei zueinander senkrechten Richtungen (571-1, 571-2) verfahrbar ist, wobei vorzugsweise die erste Gelenkanordnung (560) eine Baugruppe nach Art eines Kreuztischs (575) aufweist, der zwei zueinander orthogonale einachsige Linearführungssysteme aufweist, um das dreiachsig drehbare Gelenk in beliebige Richtungen innerhalb der Bezugsebene zu bewegen.

8. EUV-Reflektometer nach einem der Ansprüche 6 oder 7, **dadurch gekennzeichnet, dass** Antriebe und Führungssysteme der Tripod-Anordnung derart ausgelegt sind, dass maximal wirksame Kräfte auf Aktoren, Schlitten und Führungen im Mittel zu ähnlichen Anteilen auf axiale und nicht-axiale Richtungen verteilt sind, wobei eine axiale Richtung parallel zu einer Verfahrrichtung eines Schlittens verläuft.

9. EUV-Reflektometer nach einem der Ansprüche 6 bis 8, **dadurch gekennzeichnet, dass** die zweite Gelenkanordnung als ein einachsiges Schwenkgelenk (565) ausgebildet ist, das eine Schwenkung des Beins (542-1) gegenüber der Plattform (540) um eine quer zur Erstreckung des Beins verlaufende Schwenkachse (566) in der Weise ermöglicht, dass sich ein der ersten Gelenkanordnung (560) zugewandtes Ende des Beins bei Schwenkung des Beins um die Schwenkachse in der Bezugsebene in einer Verlagerungsrichtung (567) verlagert, und dass die erste Gelenkanordnung gekreuzte Schlitten (570-1, 570-2) mit Verfahrrichtungen (571-1, 571-2) aufweist, die quer, insbesondere in einem Winkel von 45° zu der Verlagerungsrichtung (567) verlaufen. und/oder

10. EUV-Reflektometer nach einem der Ansprüche 6 bis 9, **dadurch gekennzeichnet, dass** einige oder alle Aktoren zur Erzeugung einer geradlinigen Linearbewegung einer angetriebenen Komponente eine von dem Aktor drehbar antreibbare Trapezgewindespindel (584-1, 584-2) aufweisen, auf der eine mit der Komponente gekoppelte Spindelmutter (586-1, 586-2) läuft.

11. EUV-Reflektometer (100, 300) nach einem der vorhergehenden Ansprüche, **dadurch gekennzeichnet, dass** bei wenigstens einer translatorischen Bewegungsachse des parallelkinematisches Mehrachssystems (530) zwei separate Antriebsmotoren (580-1, 580-2) zur gemeinsamen Bewegung der Bewegungssachse vorgesehen sind, wobei vorzugsweise die zwei Antriebsmotoren (580-1, 580-2) einen Parallelantrieb bilden und der Parallelantrieb eine Deichsel (588, 589) zur aktiven Korrektur einer Deichselorientierung aufweist, wobei die Deichsel vorzugsweise eine encodierte Deichsel ist.

12. EUV-Reflektometer (100, 300) nach einem der Ansprüche 6 bis 11, **dadurch gekennzeichnet, dass** jedem Bein der Tripod-Anordnung eine Federanordnung (545) mit einer oder mehreren Federn zugeordnet ist, wobei die Federanordnung einerseits an dem Bein (542-2) und andererseits an der Plattform (540) angreift.

13. EUV-Reflektometer (100, 300) nach einem der vorhergehenden Ansprüche, **dadurch gekennzeichnet, dass**
die Strahlformungseinheit (130) zum Einstellen der Wellenlänge des Messstrahls einen Monochromator (140) umfasst, der ein konkav gekrümmtes Reflexionsgitter (142) und eine dem Reflexionsgitter nachgeschaltete Blendenanordnung (150) mit einem Austrittsspalt aufweist, wobei
im Strahlengang vor dem Reflexionsgitter (142) ein vorderes Reflexionselement (160) und im Strahlengang hinter dem Austrittsspalt ein hinteres Reflexionselement (170) angeordnet ist;
das vordere Reflexionselement (160) und das Reflexionsgitter (142) derart ausgebildet sind, dass im Bereich der Blendenanordnung (150) ein erster Zwischenfokus in einer ersten Richtung und ein zweiter Zwischenfokus in einer zur ersten Richtung senkrechten zweiten Richtung erzeugbar ist und
die Blendenanordnung (150) einen ersten Austrittsspalt (155-1) mit einer in der ersten Richtung einstellbaren ersten Spaltbreite (156-1) und einen zweiten Austrittsspalt (155-2) mit einer in der zweiten Richtung einstellbaren zweiten Spaltbreite (156-2) aufweist.

14. EUV-Reflektometer (100, 300) nach Anspruch 13, **gekennzeichnet durch** mindestens eine der folgenden Merkmale:
(a) das Reflexionsgitter (142) des Monochromators (140) ist als Reflexionsgitter mit variablem Linienabstand ausgebildet;
(b) das hintere Reflexionselement (170) ist als ellipsoidales Reflexionselement mit einer ersten Krümmung in einer ersten Richtung und einer zweiten Krümmung in einer dazu senkrechten zweiten Richtung ausgebildet;
(c) das vordere Reflexionselement ist als sagittal planzylindrisches Reflexionselement (160) oder als konkaves planelliptisches vorderes Reflexionselement ausgebildet;
(d) ein Verhältnis zwischen Bildweite und Gegenstandsweite eines das vordere Reflexionselement (160, 360) und das Reflexionsgitter (142) aufweisenden ersten optischen Teilsystems (130-1) der Strahlformungseinheit (130) liegt bei weniger als 3 und eines das hintere Reflexionselements aufweisenden zweiten Teilsystems (130-2) der Strahlformungseinheit (130) bei weniger als 7.

15. EUV-Reflektometer (100, 300) nach einem der Ansprüche 13 oder 14, **gekennzeichnet durch** einen Referenzdetektor (180) und einen Strahlteiler (185) zur Auskopplung eines Anteils der EUV-Strahlung des Messstrahls (190) zu dem Referenzdetektor.

## Claims

1. EUV reflectometer (100, 300) for measuring the reflectivity of a test object (110) having a reflective effect for EUV radiation, depending on the wavelength of the EUV radiation and on the angle of incidence of the EUV radiation on a reflective surface (112) of the test object, comprising:
an EUV radiation source (120) for emitting EUV radiation;
a beam shaping unit (130) for receiving EUV radiation from the EUV radiation source and for generating a measurement beam (190);
a positioning device (500) for holding the test object (110) and for positioning the test object in relation to the measurement beam (190) in a plurality of degrees of freedom in such a way that, during operation, the measurement beam (190) impinges on the reflective surface (112) at a predefinable measurement location (115) in the region of a measurement spot (195) at a predefinable angle of incidence,
a detector (198) that is sensitive to EUV radiation, for detecting the EUV radiation reflected by the reflective surface (112),
**characterized in that**
(a)the positioning device (500) has a main carrier (520), which is rotatable about a vertical rotation axis (T) by means of a rotary drive and on which a parallel kinematic multi-axis system (530) having a multiplicity of actuators is arranged, which act on a common platform (540), which is movable in three linear and three rotational degrees of freedom in space by means of the actuators, the platform (540) carrying a holding device (550) for holding the test object (110) and a rotary drive for rotating the holding device about a rotation axis (R), and
(b)the positioning device (500) is assigned a measuring system (600, 700, 1000) for determining the location and position of the test object (110) in space and/or in relation to the measurement beam (190), said measuring system being independent of drives of the actuators.

2. EUV reflectometer (100, 300) according to Claim 1, **characterized in that** the independent measuring system is designed as an optical measuring system (700, 1000) and has two or more cameras (710-1, 710-2, 1010-2, 1010-2) and also an evaluation device for evaluating image signals of the cameras or signals derived therefrom, the cameras being aligned or alignable with reference marks (720, 1020-1, 1020-2, 1020-3) attached directly to the test object and/or on the holding device for the test object.

3. EUV reflectometer (100, 300) according to Claim 2, **characterized in that** the cameras (710-1, 710-2, 1010-2, 1010-2) are arranged outside a vacuum chamber enclosing the positioning device (500) and are directed at the test object (110) and/or the holding device (550) for the test object through viewing windows, and/or
**in that** the cameras are embodied as lensless pinhole cameras (1010-1, 1010-2) having a hole (1012-1) facing the positioning device and a two-dimensional image sensor (1015-1) fitted at a distance behind the hole, and/or
**in that** the measuring system (1000) has actively luminous reference marks (1020-1, 1020-3, 1020-3), in particular in the form of light-emitting diodes (LEDs).

4. EUV reflectometer (100, 300) according to Claim 3, **characterized in that** the measuring system (1000) is designed such that the following conditions are satisfied:
(i) there are at least two pinhole cameras (1010-1, 1010-2) which are arranged at a fixed angle with respect to one another with in each case a fixed distance between the pinhole stop (1012-1) and the image sensor (1015-1) in such a way with respect to one another that in each case at least three common reference marks (1020-1, 1020-2, 1020-3) are situated at constant distances with respect to one another in the capture region of the pinhole cameras;
(ii) the diameter of the pinhole stop (1012-1), a distance between the pinhole stop and the image sensor (1015-1) and also the spatial density of pixels (1016) of the image sensor are designed in such a way that the full width at half maximum (H) of an image (1020-1') of a reference element imaged via the pinhole stop on the image sensor (1015-1) has a magnitude such that the image covers a multiplicity of pixels (1016) of the image sensor, in particular an area of at least 10 X 10 pixels.

5. EUV reflectometer (100, 300) according to any of Claims 2 to 4, **characterized in that** the evaluation device is configured to carry out an image evaluation using the effect of super-resolution.

6. EUV reflectometer (100, 300) according to any of the preceding claims, **characterized in that** the parallel kinematic multi-axis system (530) has a tripod arrangement having exactly three legs (542-1, 542-2, 542-3), each of which is movably coupled to the main carrier (520) by means of a first joint arrangement (560) at a first end facing the main carrier (520), and to the platform (540) by means of a second joint arrangement (565) at a second end facing the platform (540).

7. EUV reflectometer (100, 300) according to Claim 6, **characterized in that** the first joint arrangement (560) has a joint that is rotatable in a plurality of axes, in particular a ball-and-socket joint or a cardan joint arranged on a rotation axis, which joint couples the first end of the leg to a slide (570-1), which is movable in a reference plane in two mutually perpendicular directions (571-1, 571-2), preferably the first joint arrangement (560) having an assembly in the manner of a compound table (575) having two mutually orthogonal single-axis linear guide systems in order to move the triaxially rotatable joint in any desired directions within the reference plane.

8. EUV reflectometer according to either of Claims 6 and 7, **characterized in that** drives and guide systems of the tripod arrangement are designed in such a way that maximally effective forces on actuators, slides and guides are distributed on average in similar proportions between axial and non-axial directions, an axial direction running parallel to a movement direction of a slide.

9. EUV reflectometer according to any of Claims 6 to 8, **characterized in that** the second joint arrangement is embodied as a single-axis pivoting joint (565), which enables the leg (542-1) to be pivoted relative to the platform (540) about a pivoting axis (566) running transversely with respect to the extent of the leg in such a way that an end of the leg facing the first joint arrangement (560) is displaced upon pivoting of the leg about the pivoting axis in the reference plane in a displacement direction (567), and **in that** the first joint arrangement has crossed slides (570-1, 570-2) with movement directions (571-1, 571-2) running transversely, in particular at an angle of 45°, with respect to the displacement direction (567). and/or

10. EUV reflectometer according to any of Claims 6 to 9, **characterized in that** some or all of the actuators, for producing a rectilinear linear movement of a driven component, have a trapezoidal threaded spindle (584-1, 584-2), which is rotatably driveable by the actuator and on which runs a spindle nut (586-1, 586-2) coupled to the component.

11. EUV reflectometer (100, 300) according to any of the preceding claims, **characterized in that** in the case of at least one translational movement axis of the parallel kinematic multi-axis system (530), provision is made of two separate drive motors (580-1, 580-2) for jointly moving the movement axis, preferably the two drive motors (580-1, 580-2) forming a parallel drive and the parallel drive having a shaft (588, 589) for the active correction of a shaft orientation, the shaft preferably being an encoded shaft.

12. EUV reflectometer (100, 300) according to any of Claims 6 to 11, **characterized in that** each leg of the tripod arrangement is assigned a spring arrangement (545) having one or more springs, the spring arrangement acting on the leg (542-2) at one end and on the platform (540) at the other end.

13. EUV reflectometer (100, 300) according to any of the preceding claims, **characterized in that**
the beam shaping unit (130) comprises a monochromator (140) for setting the wavelength of the measurement beam, said monochromator having a concavely curved reflection grating (142) and, disposed downstream of the reflection grating, a stop arrangement (150) with an exit slit, wherein
a front reflection element (160) is arranged in the beam path upstream of the reflection grating (142) and a back reflection element (170) is arranged in the beam path downstream of the exit slit;
the front reflection element (160) and the reflection grating (142) are embodied in such a way that in the region of the stop arrangement (150) it is possible to produce a first intermediate focus in a first direction and a second intermediate focus in a second direction, perpendicular to the first direction, and
the stop arrangement (150) has a first exit slit (155-1) having a first slit width (156-1), which is settable in the first direction, and a second exit slit (155-2) having a second slit width (156-2), which is settable in the second direction.

14. EUV reflectometer (100, 300) according to Claim 13, **characterized by** at least one of the following features:
(a) the reflection grating (142) of the monochromator (140) is embodied as a reflection grating having a variable line spacing;
(b) the back reflection element (170) is embodied as an ellipsoidal reflection element having a first curvature in a first direction and a second curvature in a second direction perpendicular thereto;
(c) the front reflection element is embodied as a sagittally plano-cylindrical reflection element (160) or as a concave plano-elliptical front reflection element;
(d) a ratio between image distance and object distance of a first optical subsystem (130-1) of the beam shaping unit (130), said first optical subsystem having the front reflection element (160, 360) and the reflection grating (142), is less than 3 and that of a second subsystem (130-2) of the beam shaping unit (130), said second subsystem having the back reflection element, is less than 7.

15. EUV reflectometer (100, 300) according to either of Claims 13 and 14, **characterized by** a reference detector (180) and a beam splitter (185) for coupling out a portion of the EUV radiation of the measurement beam (190) to the reference detector.

## Revendications

1. Réflectomètre EUV (100, 300) destiné à mesurer la réflectivité d'un objet de test (110), qui réfléchit le rayonnement EUV, en fonction de la longueur d'onde du rayonnement EUV et de l'angle d'incidence du rayonnement EUV à une surface réfléchissante (112) de l'objet de test, comprenant :
une source de rayonnement EUV (120) destinée à émettre un rayonnement EUV ;
une unité de formation de faisceau (130) destinée à recevoir un rayonnement EUV de la source de rayonnement EUV et à générer un faisceau de mesure (190) ;
un dispositif de positionnement (500) destiné à maintenir l'objet de test (110) et à positionner l'objet de test par rapport au faisceau de mesure (190) dans plusieurs degrés de liberté de manière que, pendant le fonctionnement, le faisceau de mesure (190) est incident à la surface réfléchissante (112) avec un angle d'incidence spécifiable à un site de mesure spécifiable (115) dans la zone d'un point de mesure (195),
un détecteur (198) sensible au rayonnement EUV et destiné à détecter le rayonnement EUV réfléchi par la surface réfléchissante (112),
**caractérisé en ce que**
(a) le dispositif de positionnement (500) comporte un support de base (520) qui peut tourner sur un axe de rotation vertical (T) au moyen d'un entraînement rotatif et sur lequel est disposé un système multiaxes à cinématique parallèle (530) pourvu d'une pluralité d'actionneurs qui agissent sur une plate-forme commune (540) qui peut être déplacée dans l'espace selon trois degrés de liberté linéaires et trois degrés de liberté en rotation au moyen des actionneurs, la plate-forme (540) portant un dispositif de retenue (550) destiné à maintenir l'objet de test (110) et un entraînement en rotation destiné à faire tourner le dispositif de retenue sur un axe de rotation (R), et
(b) le dispositif de positionnement (500) est associé à un système de mesure (600, 700, 1000) indépendant des entraînements des actionneurs et destiné à déterminer l'emplacement et la position de l'objet de test (110) dans l'espace et/ou par rapport au faisceau de mesure (190).

2. Réflectomètre EUV (100, 300) selon la revendication 1, **caractérisé en ce que** le système de mesure indépendant est conçu comme un système de mesure optique (700, 1000) et comporte deux ou plusieurs caméras (710-1, 710-2, 1010-2, 1010-2) ainsi qu'un module d'évaluation destiné à évaluer des signaux d'image des caméras ou des signaux dérivés de ceux-ci, les caméras étant alignées ou pouvant être alignées avec des repères (720, 1020-1, 1020-2, 1020-3) qui sont fixés directement sur l'objet de test et/ou sur le dispositif de retenue de l'objet de test.

3. Réflectomètre EUV (100, 300) selon la revendication 2, **caractérisé en ce que** les caméras (710-1, 710-2, 1010-1, 1010-2) sont disposées à l'extérieur d'une chambre à vide entourant le module de positionnement (500) et sont dirigées, à travers des fenêtres de visualisation, vers l'objet de test (110) et/ou le dispositif de retenue (550) destiné à l'objet de test et/ou
**en ce que** les caméras sont conçues comme des caméras à sténopé sans objectif (1010-1, 1010-2) pourvues d'un trou (1012-1) dirigé vers le dispositif de positionnement et d'un capteur d'image bidimensionnel (1015-1) monté à distance en arrière du trou et/ou **en ce que** le système de mesure (1000) comporte des repères photo-actifs (1020-1, 1020-3, 1020-3), notamment sous forme de diodes électroluminescentes (LED).

4. Réflectomètre EUV (100, 300) selon la revendication 3, **caractérisé en ce que** le système de mesure (1000) est conçu de façon à remplir les conditions suivantes :
(i) au moins deux caméras à sténopé (1010-1, 1010-2) sont prévues qui sont disposées suivant un angle fixe l'une par rapport à l'autre à une distance fixe entre le sténopé (1012-1) et le capteur d'image (1015-1) de manière qu'au moins trois repères communs (1020-1, 1020-2, 1020-3) se trouvent à des distances constantes les uns des autres dans la zone de détection des caméras à sténopé ;
(ii) le diamètre du sténopé (1012-1), une distance entre le sténopé et le capteur d'image (1015-1) et la densité spatiale de pixels (1016) du capteur d'image sont conçus de manière que la demi-largeur (H) d'une image (1020-1') d'un élément de référence, reproduit par le biais du sténopé, sur le capteur d'image (1015-1) soit si grande que l'image couvre un grand nombre de pixels (1016) du capteur d'image, en particulier une superficie d'au moins 10 X 10 pixels.

5. Réflectomètre EUV (100, 300) selon l'une des revendications 2 à 4, **caractérisé en ce que** le module d'évaluation est conçu pour effectuer une évaluation d'image en utilisant l'effet de super-résolution.

6. Réflectomètre EUV (100, 300) selon l'une des revendications précédentes, **caractérisé en ce que** le système multiaxes à cinématique parallèle (530) comporte un ensemble formant tripode pourvu d'exactement trois pieds (542-1, 542-2, 542-3) qui sont chacun couplés de manière mobile au support de base (520) au moyen d'un premier ensemble d'articulations (560) à une première extrémité dirigée vers le support de base (520) et à la plate-forme (540) au moyen d'un deuxième ensemble d'articulations (565) à une deuxième extrémité dirigée vers la plate-forme (540).

7. Réflectomètre EUV (100, 300) selon la revendication 6, **caractérisé en ce que** le premier ensemble d'articulations (560) comporte une articulation rotative suivant plusieurs axes, notamment une articulation à rotule ou une articulation à cardan disposée sur un axe de rotation, qui accouple la première extrémité du pied à un chariot (570-1) qui peut être déplacé dans un plan de référence dans deux directions (571-1, 571-2) perpendiculaires l'une à l'autre, le premier ensemble d'articulations (560) comportant de préférence un sous-groupe à la manière d'une table à mouvements croisés (575) qui comporte deux systèmes de guidage linéaire uni-axiaux orthogonaux l'un à l'autre afin de déplacer l'articulation rotative suivant trois axes dans des directions quelconques à l'intérieur du plan de référence.

8. Réflectomètre EUV selon l'une des revendications 6 ou 7, **caractérisé en ce que** des systèmes d'entraînement et de guidage de l'ensemble formant tripode sont conçus de manière que des forces effectives maximales sur des actionneurs, des chariots et des guides sont réparties en moyenne dans des proportions similaires dans des directions axiales et non axiales, une direction axiale s'étendant parallèlement à une direction de déplacement d'un chariot.

9. Réflectomètre EUV selon l'une des revendications 6 à 8, **caractérisé en ce que** le deuxième ensemble d'articulations est conçu comme une articulation pivotante uni-axiale (565) qui permet un pivotement du pied (542-1) par rapport à la plateforme (540) sur un axe de pivotement (566) qui s'étend transversalement à l'extension du pied de manière qu'une extrémité du pied, qui est dirigée vers le premier ensemble d'articulations (560), se déplace dans une direction de déplacement (567) lorsque le pied pivote sur l'axe de pivotement dans le plan de référence et **en ce que** le premier ensemble d'articulations comporte des chariots croisés (570-1, 570-2) présentant des directions de déplacement (571-1, 571-2) qui s'étendent transversalement, en particulier suivant un angle de 45° par rapport à la direction de déplacement (567). et/ou

10. Réflectomètre EUV selon l'une des revendications 6 à 9, **caractérisé en ce que**, afin de générer un mouvement linéaire rectiligne d'un composant entraîné, certains actionneurs ou tous les actionneurs comportent une broche filetée trapézoïdale (584-1, 584-2) qui peut être entraînée en rotation par l'actionneur et sur laquelle s'étend l'écrou de broche (586-1, 586-2) accouplé au composant.

11. Réflectomètre EUV (100, 300) selon l'une des revendications précédentes, **caractérisé en ce que**, dans le cas d'au moins un axe de déplacement en translation du système multiaxes à cinématique parallèle (530), deux moteurs d'entraînement séparés (580-1, 580-2) sont prévus pour le déplacement commun de l'axe de déplacement, les deux moteurs d'entraînement (580-1, 580-2) formant de préférence un entraînement parallèle et l'entraînement parallèle comportant une barre de traction (588, 589) destinée à corriger activement une orientation de barre de traction, la barre de traction étant de préférence une barre de traction codée.

12. Réflectomètre EUV (100, 300) selon l'une des revendications 6 à 11, **caractérisé en ce que** chaque pied de l'ensemble formant tripode est associé à un ensemble de ressorts (545) comprenant un ou plusieurs ressorts, l'ensemble de ressorts s'engageant d'une part avec le pied (542-2) et d'autre part avec la plateforme (540).

13. Réflectomètre EUV (100, 300) selon l'une des revendications précédentes, **caractérisé en ce que** afin de régler la longueur d'onde du faisceau de mesure, l'unité de formation de faisceau (130) comprend un monochromateur (140) qui comporte un réseau de réflexion (142) incurvé de façon concave et un ensemble formant diaphragme (150) monté en aval du réseau de réflexion et pourvu d'une fente de sortie,
un élément de réflexion avant (160) étant disposé dans le trajet de faisceau en avant du réseau de réflexion (142) et un élément de réflexion arrière (170) étant disposé dans le trajet de faisceau en arrière de la fente de sortie ;
l'élément de réflexion avant (160) et le réseau de réflexion (142) étant conçus de manière que, dans la zone de l'ensemble formant diaphragme (150), un premier foyer intermédiaire puisse être généré dans une première direction et un deuxième foyer intermédiaire puisse être généré dans une deuxième direction perpendiculaire à la première direction et
l'ensemble formant diaphragme (150) comportant une première fente de sortie (155-1) ayant une première largeur de fente (156-1) réglable dans la première direction et une deuxième fente de sortie (155-2) ayant une deuxième largeur de fente (156-2) réglable dans la deuxième direction.

14. Réflectomètre EUV (100, 300) selon la revendication 13, **caractérisé par** au moins une des caractéristiques suivantes :
(a) le réseau de réflexion (142) du monochromateur (140) est conçu comme un réseau de réflexion à espacement de lignes variable ;
(b) l'élément de réflexion arrière (170) est conçu comme un élément de réflexion ellipsoïdal ayant une première courbure dans une première direction et une deuxième courbure dans une deuxième direction perpendiculaire à la première direction ;
(c) l'élément de réflexion avant est conçu comme un élément de réflexion plan-cylindrique sagittal (160) ou comme un élément de réflexion avant plan-elliptique concave ;
(d) un rapport entre la largeur d'image et la largeur d'objet d'un premier sous-système optique (130-1), comportant l'élément de réflexion avant (160, 360) et le réseau de réflexion (142), de l'unité de formation de faisceau (130) étant inférieur à 3 et celui d'un deuxième sous-système (130-2), comportant l'élément de réflexion arrière, de l'unité de formation de faisceau (130) étant inférieur à 7.

15. Réflectomètre EUV (100, 300) selon l'une des revendications 13 ou 14, **caractérisé par** un détecteur de référence (180) et un séparateur de faisceau (185) destiné à délivrer en sortie par couplage une partie du rayonnement EUV du faisceau de mesure (190) au détecteur de référence.
